# EUROPEAN PATENT SPECIFICATION

(11) **EP 4 344 175 B1**
(45) Date of publication and mention of the grant of the patent: **08.04.2026**
(21) Application number: 23741961.9
(22) Date of filing: 11.07.2023
(51) Int. Cl.: H04M 1/02, G06F 1/16, H05K 5/06, H01Q 1/24

(54) **FOLDABLE ELECTRONIC DEVICE COMPRISING SUBSTRATE PORTION**
FALTBARE ELEKTRONISCHE VORRICHTUNG MIT EINER PLATTENEINHEIT
DISPOSITIF ÉLECTRONIQUE PLIABLE COMPRENANT UNE PARTIE SUBSTRAT

(30) Priority: 04.08.2022 KR 20220097300; 09.08.2022 KR 20220099573
(43) Date of publication of application: 27.03.2024
(73) Proprietor: Samsung Electronics Co., Ltd., Suwon-si, Gyeonggi-do 16677 (KR)
(72) Inventor: JUNG, Kiyoung, Suwon-si, Gyeonggi-do 16677 (KR); KIM, Sangkyu, Suwon-si, Gyeonggi-do 16677 (KR); AN, Jungchul, Suwon-si, Gyeonggi-do 16677 (KR)
(74) Representative: Gulde & Partner
(86) International application number: PCT/KR2023/009807
(87) International publication number: WO 2024/029767

(56) References cited:
- WO-A1-2022/145720
- CN-A- 110 445 913
- KR-A- 20190 137 433
- KR-A- 20210 038 108
- KR-A- 20210 041 985
- KR-A- 20220 016 591
- US-A1- 2022 035 410

## Description

### [Technical Field]

The disclosure relates to a foldable electronic device including a board unit.

### [Background Art]

With the development of information and communication technology and semiconductor technology, various functions are being integrated into one portable electronic device. For example, an electronic device may implement not only communication functions but also entertainment functions, such as playing games, multimedia functions, such as playing music and videos, communication and security functions for mobile banking, and scheduling and e-wallet functions. Such electronic devices become compact enough for users to carry in a convenient way.

As mobile communication services extend up to multimedia service sectors, electronic devices require a larger display to allow users satisfactory use of multimedia services as well as voice call or text messaging services. However, the display size of the electronic device may be in a trade-off relationship with downsizing the electronic device.

US 2022/035410 Al discloses an electronic device including at least one hinge module providing at least one folding axis, a first housing coupled with the hinge module to rotate around the folding axis, a second housing coupled with the hinge module to rotate around the folding axis, and rotating with respect to the first housing, between a first position at which the second housing is folded, facing the first housing and a second position at which the second housing is unfolded at a specified angle from the first position, a first battery provided in the first housing, a first circuit board including a first arrangement area disposed in parallel to the first battery at least partially along a direction parallel to the folding axis, and a second arrangement area extending from the first arrangement area and disposed between the folding axis and the battery, and at least one flexible printed circuit board (FPCB) extending from the interior of the first housing to the interior of the second housing across the folding axis. Inside the first housing, one end portion of the FPCB is connected to the second arrangement area, between the folding axis and the first battery, and a part of the FPCB is disposed between the first battery and the second arrangement area.

### [Disclosure]

### [Means to Address the Problems]

The present invention is defined by the appended set of claims. Preferred embodiments are defined by the dependent claims.

### [Description of the Drawings]

FIG. 1 is a block diagram illustrating an electronic device in a network environment according to an embodiment of the disclosure;
FIG. 2 is a view illustrating an unfolded state of an electronic device according to an embodiment of the disclosure;
FIG. 3 is a view illustrating a folded state of an electronic device according to an embodiment of the disclosure;
FIG. 4 is an exploded perspective view illustrating an electronic device according to an embodiment of the disclosure;
FIG. 5 is a front view illustrating an electronic device including a hinge structure and a hinge cover according to an embodiment of the disclosure;
FIG. 6 is a perspective view illustrating a hinge structure in an unfolded state according to an embodiment of the disclosure;
FIG. 7 is a perspective view illustrating a hinge structure in a folded state according to an embodiment of the disclosure;
FIG. 8 is an exploded perspective view illustrating a hinge structure according to an embodiment of the disclosure;
FIG. 9 is a top view illustrating a hinge structure according to an embodiment of the disclosure;
FIG. 10 is a rear view illustrating a hinge structure according to an embodiment of the disclosure;
FIG. 11 is an exploded perspective view illustrating a hinge structure according to an embodiment of the disclosure;
FIG. 12 is a rear view illustrating an electronic device except for a rear plate and a hinge assembly according to an embodiment of the disclosure;
FIG. 13 is a rear view illustrating an electronic device including a hinge structure, a hinge cover, and a first circuit board according to an embodiment of the disclosure;
FIG. 14 is a rear view illustrating an electronic device according to an embodiment of the disclosure;
FIG. 15 is a cross-sectional view taken along line A-A' of FIG. 14 of the disclosure;
FIG. 16 is a cross-sectional view taken along line B-B' of FIG. 14 of the disclosure;
FIG. 17 is a perspective view illustrating an electronic device including an antenna structure and a speaker hole according to an embodiment of the disclosure; and
FIG. 18 is a circuit diagram illustrating an electronic device including a communication module according to an embodiment of the disclosure.

### [Mode for Invention]

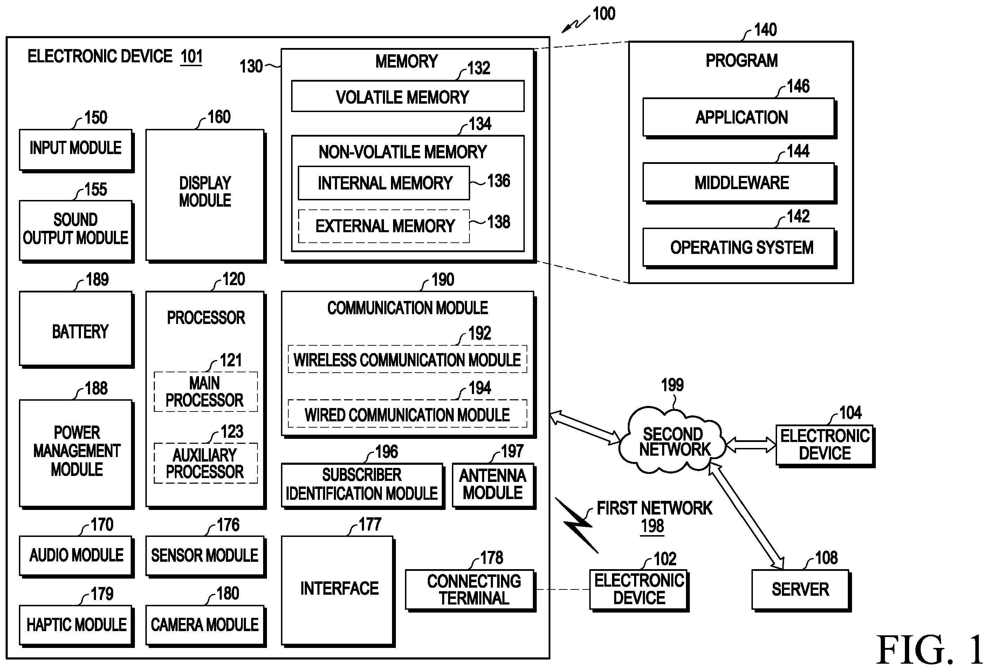

FIG. 1 is a block diagram illustrating an electronic device in a network environment according to an embodiment of the disclosure;
Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module may include an antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to an embodiment, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, or replacements for a corresponding embodiment within the scope of the present invention as defined by the appended set of claims. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

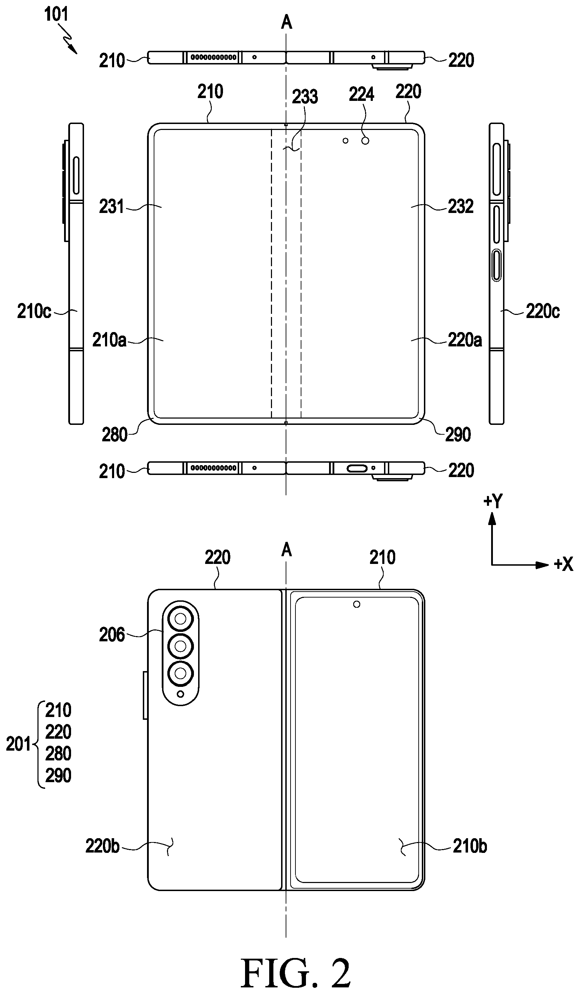

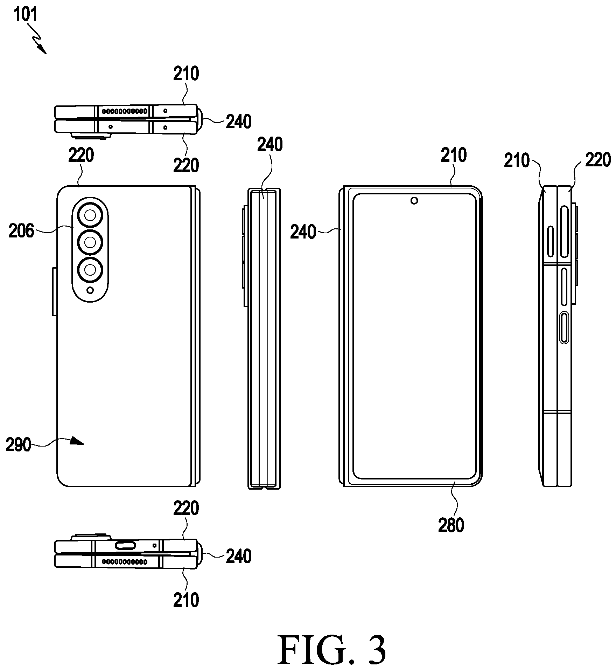

FIG. 2 is a view illustrating an unfolded state of an electronic device according to an embodiment of the disclosure. FIG. 3 is a view illustrating a folded state of an electronic device according to an embodiment of the disclosure.

Referring to FIGS. 2 and 3, an electronic device 101 includes a housing 201 and a display 203. The electronic device may further include a hinge cover 240 covering a foldable portion of the housing 201. The display 230 is disposed in a space formed by the housing 201. According to an embodiment, the surface where the screen output from the display 230 is exposed is defined as a front surface (e.g., the first front surface 210a and the second front surface 220a) of the electronic device 101. A surface opposite to the front surface is defined as a rear surface (e.g., the first rear surface 210b and the second rear surface 220b) of the electronic device 101. Further, a surface surrounding the space between the front surface and the rear surface is defined as a side surface (e.g., the first side surface 210c and the second side surface 220c) of the electronic device 101. The side surface of the electronic device 101 may be a side surface of at least one of the first housing 210 or the second housing 220. The electronic device 101 of FIGS. 2 and 3 may be referred to as a foldable electronic device, a portable electronic device, or a portable foldable electronic device. According to an embodiment, the housing 201 may be referred to as a foldable housing.

According to an embodiment, the housing 201 includes a first housing 210 and a second housing 220 rotatable with respect to the first housing 210. The housing 201 may further include a first rear cover 280 and a second rear cover 290. The housing 201 of the electronic device 101 are not limited to the shape and coupling shown in FIGS. 2 and 3 but may rather be implemented in other shapes or via a combination and/or coupling of other components. For example, in an embodiment, the first housing 210 and the first rear cover 280 may be integrally formed with each other, and the second housing 220 and the second rear cover 290 may be integrally formed with each other.

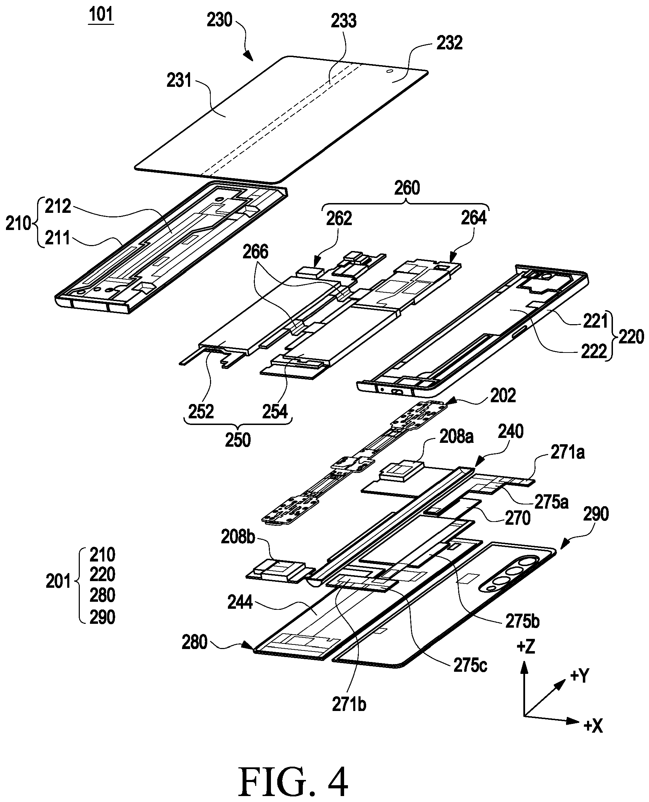

According to an embodiment, the first housing 210 is connected to a hinge structure (e.g., the hinge assembly 202 of FIG. 4) and may include a first front surface 210a facing in a first direction and a first rear surface 210b facing in a second direction opposite to the first direction. The second housing 220 may be connected to the hinge assembly 202 and may include a second front surface 220a facing in a third direction and a second rear surface 220b facing in a fourth direction opposite to the third direction, and may rotate from the first housing 210 about the hinge assembly 202. Thus, the electronic device 101 may turn into a folded state or unfolded state. In the folded state of the electronic device 101, the first front surface 210a may face the second front surface 220a and, in the unfolded state, the third direction may be identical to the first direction. Hereinafter, unless otherwise mentioned, directions are described based on the unfolded state of the electronic device 101.

According to an embodiment, the first housing 210 and the second housing 220 are disposed on both sides of the folding axis A and be overall symmetrical in shape with respect to the folding axis A. As set forth below, the first housing 210 and the second housing 220 may have different angles or distances formed therebetween depending on whether the electronic device 101 is in the unfolded, folded, or intermediate state. According to an embodiment, the second housing 220 further includes the sensor area 224 where sensors (e.g., front camera) are disposed but, in the remaining area, the second housing 220 may be symmetrical in shape with the first housing 210.

According to an embodiment, there may be provided a plurality of (e.g., two) folding axes A parallel to each other. In the disclosure, the folding axis A is provided along the length direction (Y-axis direction) of the electronic device 101, but the direction of the folding axis A is not limited thereto. For example (not shown), the electronic device 101 may include the folding axis A extending along the width direction (e.g., X-axis direction).

According to an embodiment, the electronic device 101 may include a structure to which a digital pen may be attached. For example, the electronic device 101 may include a magnetic substance configured to attach the digital pen to a side surface of the first housing 210 or a side surface of the second housing 220. According to an embodiment, the electronic device 101 may include a structure into which a digital pen may be inserted. For example, a hole (not shown) into which the digital pen may be inserted may be formed in a side surface of the first housing 210 or a side surface of the second housing 220 of the electronic device 101.

According to an embodiment, the first housing 210 and the second housing 220 may at least partially be formed of a metal or non-metallic material with a rigidity selected to support the display 230. At least a portion formed of metal may provide a ground plane of the electronic device 101 and may be electrically connected with a ground line formed on a printed circuit board (e.g., the circuit board 260 of FIG. 4).

According to an embodiment, the sensor area 224 may be formed adjacent to an edge or corner of the second housing 220 and to have a predetermined area. However, the placement, shape, or size of the sensor area 224 is not limited to those illustrated. For example, in another embodiment, the sensor area 224 may be provided in a different corner of the second housing 220 or in any area between the top corner and the bottom corner or in the first housing 210. In an embodiment, components for performing various functions, embedded in the electronic device 101, may be exposed through the sensor area 224 or one or more openings in the sensor area 224 to the front surface of the electronic device 101. In various embodiments, the components may include various kinds of sensors. The sensor may include at least one of, e.g., a front-facing camera, a receiver, or a proximity sensor.

According to an embodiment, the first rear cover 280 may be disposed on one side of the folding axis A on the rear surface of the electronic device 101 and have, e.g., a substantially rectangular periphery which may be surrounded by the first housing 210. Similarly, the second rear cover 290 may be disposed on the opposite side of the folding axis A on the rear surface of the electronic device 101 and its periphery may be surrounded by the second housing 220.

According to an embodiment, the first rear cover 280 and the second rear cover 290 may be substantially symmetrical in shape with respect to the folding axis (axis A). However, the first rear cover 280 and the second rear cover 290 are not necessarily symmetrical in shape. In another embodiment, the electronic device 101 may include the first rear cover 280 and the second rear cover 290 in various shapes.

According to an embodiment, the first rear cover 280, the second rear cover 290, the first housing 210, and the second housing 220 may form a space where various components (e.g., a printed circuit board or battery) of the electronic device 101 may be disposed. According to an embodiment, one or more components may be arranged or visually exposed on/through the rear surface of the electronic device 101. For example, at least a portion of a sub display (e.g., the sub display 244 of FIG. 4) may be visually exposed through at least a portion of the first rear cover 280. In another embodiment, one or more components or sensors may be visually exposed through at least a portion of the first rear cover 290. According to various embodiments, the sensor may include a proximity sensor and/or a camera module 206 (e.g., rear camera).

According to an embodiment, a front camera exposed to the front surface of the electronic device 101 through one or more openings provided in the sensor area 224 or the camera module 206 exposed through at least a portion of the second rear cover 290 may include one or more lenses, an image sensor, and/or an image signal processor. According to an embodiment, two or more lenses (an infrared (IR) camera, a wide-angle lens, and a telephoto lens) and image sensors may be disposed on one surface of the electronic device 101.

According to an embodiment, the hinge cover 240 may be disposed between the first housing 210 and the second housing 220 to hide the internal components (e.g., the hinge assembly 202 of FIG. 4). According to an embodiment, the hinge cover 240 may be hidden by a portion of the first housing 210 and second housing 220 or be exposed to the outside depending on the state (e.g., the unfolded state (e.g., flat state) or folded state) of the electronic device 101.

According to an embodiment, as shown in FIG. 2, in the unfolded state of the electronic device 101, the hinge cover 240 may be hidden, and thus not exposed, by the first housing 210 and the second housing 220. As another example, as shown in FIG. 3, in the folded state (e.g., a fully folded state) of the electronic device 101, the hinge cover 240 may be exposed to the outside between the first housing 210 and the second housing 220. As another example, in an intermediate state in which the first housing 210 and the second housing 220 are folded with a certain angle, the hinge cover 240 may be partially exposed to the outside between the first housing 210 and the second housing 220. In this case, however, the exposed area may be smaller than in the fully folded state. According to an embodiment, the hinge cover 240 may include a curved surface.

According to an embodiment, the display 230 may be disposed in a space formed by the housing 201. For example, the display 230 may be seated on a recess formed by the housing 201 and may occupy most of the front surface of the electronic device 101. Thus, the front surface of the electronic device 101 may include the display 230 and a partial area of the first housing 210 and a partial area of the second housing 220, which are adj acent to the display 230. The rear surface of the electronic device 101 may include a first rear cover 280, a partial area of the first housing 210 adjacent to the first rear cover 280, a second rear cover 290, and a partial area of the second housing 220 adjacent to the second rear cover 290.

According to an embodiment, the display 230 may include a plurality of displays spaced apart from each other. For example, the display 230 may include a first display area 231 disposed on the first housing 210 and a second display area 232 disposed on the second housing 220. According to an embodiment, the first display area 231 and the second display area 232 may rotate about the folding axis A.

According to an embodiment, the display 230 may mean a display at least a portion of which may be transformed into a flat or curved surface. For example, the display 230 may be a foldable or flexible display. According to an embodiment, the display 230 may include a folding area 233, a first display area 231 disposed on one side of the folding area 233 (e.g., the left side of the folding area 233 of FIG. 2), and a second display area 232 disposed on the opposite side of the folding area 233 (e.g., the right side of the folding area 203 of FIG. 2). However, the segmentation of the display 230 is merely an example, and the display 230 may be divided into a plurality of (e.g., four or more, or two) areas depending on the structure or function of the display 200. For example, in the embodiment illustrated in FIG. 2, the display 230 may be divided into the areas by the folding area 233 or folding axis (axis A) extending in parallel with the Y axis but, in another embodiment, the display 230 may be divided into the areas with respect to another folding area (e.g., a folding area parallel with the X axis) or another folding axis (e.g., a folding axis parallel with the X axis). According to an embodiment, the display 230 may be coupled with or disposed adjacent to a touch detection circuit, a pressure sensor capable of measuring the strength (pressure) of touches, and/or a digitizer (not shown) for detecting a magnetic field-type stylus pen.

According to an embodiment, the first display area 231 and the second display area 232 may be overall symmetrical in shape with respect to the folding area 233. According to an embodiment (not shown), unlike the first display area 231, the second display area 232 may include a notch depending on the presence of the sensor area 224, but the rest may be symmetrical in shape with the first display area 231. In other words, the first display area 231 and the second display area 232 may include symmetrical portions and asymmetrical portions.

Described below are the operation of the first housing 210 and the second housing 220 and each area of the display 230 depending on the state (e.g., the unfolded state (or flat state) and folded state) of the electronic device 101.

According to an embodiment, when the electronic device 101 is in the unfolded state (flat state) (e.g., FIG. 2), the first housing 210 and the second housing 220 may be disposed to face in the same direction while being angled substantially at 180 degrees therebetween. The surface of the first display area 231 and the surface of the second display area 232 of the display 230 may be angled at 180 degrees therebetween while facing in the same direction (e.g., forward of the front surface of the electronic device). The folding area 233 may form the same plane with the first display area 231 and the second display area 232.

According to an embodiment, when the electronic device 101 is in the folded state (e.g., FIG. 3), the first housing 210 and the second housing 220 may be disposed to face each other. The surface of the first display area 231 and the surface of the second display area 232 of the display 230 may be angled at a small angle (e.g., an angle between 0 degrees and 10 degrees) therefrom while facing each other. At least a portion of the folding area 233 may have a curved surface with a predetermined curvature.

According to an embodiment, when the electronic device 101 is in the intermediate state (not shown), the first housing 210 and the second housing 220 may be disposed at a certain angle therebetween. The surface of the first display area 231 of the display 230 and the surface of the second display area 232 may form an angle which is larger than the angle in the folded state and smaller than the angle in the unfolded state. The folding area 233 may at least partially have a curved surface with a predetermined curvature and, in this case, the curvature may be smaller than that when it is in the folded state.

FIG. 4 is an exploded perspective view illustrating an electronic device according to an embodiment of the disclosure.

Referring to FIG. 4, an electronic device 101 includes a housing 201, a display 230, a hinge assembly 202, a battery 250, and a board unit 260. The housing 201 includes a first housing 210 and a second housing 220. The housing 201 may further include a first rear cover 280 and a second rear cover 290. The configuration of the first housing 210, the second housing 220, the hinge cover 240, the first rear cover 280, and the second rear cover 290 of FIG. 4 may be identical in whole or part to the configuration of the first housing 210, the second housing 220, the hinge cover 240, the first rear cover 280, and the second rear cover 290 of FIG. 2 and/or FIG. 3.

According to an embodiment, the first housing 210 and the second housing 220 may be assembled together to be coupled to two opposite sides of the hinge assembly 202. According to an embodiment, the first housing 210 may include a first supporting area 212 that may support the components (e.g., the first circuit board 262 and/or the first battery 252) of the electronic device 101 and a first sidewall 211 surrounding at least a portion of the first supporting area 212. The first sidewall 211 may include a first side surface (e.g., the first side surface 210c of FIG. 2) of the electronic device 101. According to an embodiment, the second housing 220 may include a second supporting area 222 that may support the components (e.g., the second circuit board 264 and/or the second battery 254) of the electronic device 101 and a second sidewall 221 surrounding at least a portion of the second supporting area 222. The second sidewall 221 may include a second side surface (e.g., the second side surface 220c of FIG. 2) of the electronic device 101.

According to an embodiment, the display 230 may include a first display area 231, a second display area 232, and a folding area 233. The configuration of the first display area 231, the second display area 232, and the folding area 233 of FIG. 4 may be identical in whole or part to the configuration of the first display area 231, the second display area 232, and the folding area 233 of FIG. 2 and/or FIG. 3.

According to an embodiment, the electronic device 101 may include a sub display 244. The sub display 244 may display screen in a different direction from the display areas 231 and 232. For example, the sub display 244 may output screen in a direction opposite to the first display area 231. According to an embodiment, the sub display 244 may be disposed on the first rear cover 280.

According to an embodiment, the battery 250 may include a first battery 252 disposed in the first housing 210 and a second battery 254 disposed in the second housing 220. According to an embodiment, the first battery 252 may be connected with the first circuit board 262, and the second battery 254 may be connected to the second circuit board 264. According to an embodiment, the battery 250 may supply power to at least one component of the electronic device 101. According to an embodiment, the battery 250 may include, for example, a primary cell which is not rechargeable, a secondary cell which is rechargeable, or a fuel cell.

According to an embodiment, the board unit 260 may include a first circuit board 262 disposed in the first housing 210 and a second circuit board 264 disposed in the second housing 220. According to an embodiment, the first circuit board 262 and the second circuit board 264 may be electrically connected by at least one flexible circuit board 266. According to an embodiment, at least a portion of the flexible circuit board 266 may be disposed across the hinge assembly 202. According to an embodiment, the first circuit board 262 and the second circuit board 264 may be disposed in a space formed by the first housing 210, the second housing 220, the first rear cover 280, and the second rear cover 290. Components for implementing various functions of the electronic device 101 may be disposed on the first circuit board 262 and the second circuit board 264.

According to an embodiment, the electronic device 101 may include speakers 208a and 208b. According to an embodiment, the speakers 208a and 208b may convert the electric signal into sound. According to an embodiment, the speakers 208 and 208b may be disposed in a space formed by the first housing 210, the second housing 220, the first rear cover 280, and the second rear cover 290. According to an embodiment, the speakers 208a and 208b may include an upper speaker 208a positioned in an upper portion (+Y direction) of the electronic device 101 and a lower speaker 208b positioned in a lower portion (-Y direction) of the electronic device 101. **In** the disclosure, the speakers 208a and 208b are illustrated as positioned in one housing (e.g., the first housing 210 of FIG. 40, but this is an optional structure. For example, the speakers 208a and 208b may be positioned in at least one of the first housing 210 or the second housing 220. The configuration of the speakers 208a and 208b of FIG. 4 may be identical in whole or part to the configuration of the sound output module 155 of FIG. 1.

According to an embodiment, the electronic device 101 may include a rear member 270 (or rear case). According to an embodiment, the rear member 270 may be disposed in the housing 201 (e.g., the second housing 220). According to an embodiment, the rear member 270 may receive at least one antenna 275.

According to an embodiment, the electronic device 101 may include an antenna 275. The antennas 275a and 275b may include, e.g., an ultra-wide band (UWB) antenna 275a, a near-field communication (NFC) antenna, a wireless charging antenna, and/or a magnetic secure transmission (MST) antenna 275b. The antenna 275 may perform short-range communication with, e.g., an external device or may wirelessly transmit or receive power necessary for charging.

According to an embodiment, an antenna structure may be formed by a portion of the housing 201 or a combination thereof. For example, the antenna 275 may include a communication antenna 275c at least a portion of which is exposed to the outside and which forms at least a portion of the exterior of the electronic device 101. The communication antenna 275c may be used for communication (e.g., Wi-Fi) with an external electronic device. The communication antenna 275c may be connected to the upper portion 271a or the lower portion 271b of the rear member 270.

In the following detailed description, a configuration in which a pair of housings (or referred to as a 'housing') are coupled to be rotatable by a hinge assembly (or referred to as a 'hinge structure') is described as an example. However, it should be noted that the electronic device according to various embodiments of the disclosure is not limited thereto. For example, according to various embodiments, the electronic device may include three or more housings. In the embodiment disclosed below, a "pair of housings" may mean two rotatably-coupled housings among three or more housings.

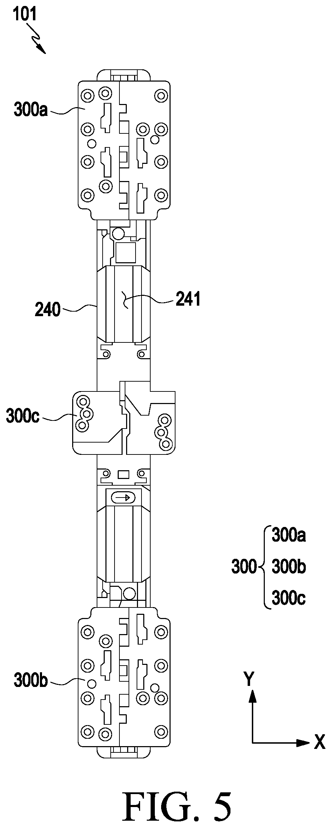

FIG. 5 is a front view illustrating an electronic device including a hinge structure and a hinge cover according to an embodiment of the disclosure.

Referring to FIG. 5, the electronic device 101 includes a hinge structure 300 and may further include a hinge cover 240. The configuration of the hinge cover 240 and the hinge structure 300 of FIG. 5 may be identical in whole or part to the configuration of the hinge assembly 202 of FIG. 4. For example, the hinge assembly 202 may be referred to as an assembly of the hinge cover 240 and the hinge structure 300.

According to an embodiment, there may be provided a plurality of hinge structures 300. For example, the hinge structure 300 may include a first hinge 300a, a second hinge 300b spaced apart from the first hinge 300a in a length direction (e.g., Y-axis direction) of the electronic device 101, and a third hinge 300c positioned between the first hinge 300a and the second hinge 300b. According to an embodiment, the first hinge 300a may be adjacent to the upper surface of the housing (e.g., the housing 201 of FIG. 3). The second hinge 300b may be adjacent to the lower surface of the housing (e.g., the housing 201 of FIG. 3). According to an embodiment, the first hinge 300a may be referred to as an upper hinge. The second hinge 300b may be referred to as a lower hinge. The third hinge 300c may be referred to as a central hinge. According to an embodiment, by the third hinge 300c positioned between the first hinge 300a and the second hinge 300b, the first hinge 300a or the second hinge 300b and the bezel (or black matrix (BM)) area of the electronic device 101 may be downsized.

According to an embodiment, the hinge cover 240 may receive at least a portion of at least one hinge structure 300. For example, the hinge cover 240 may include a receiving recess 241 for receiving a portion (e.g., the slide member 325) of the hinge structure 300.

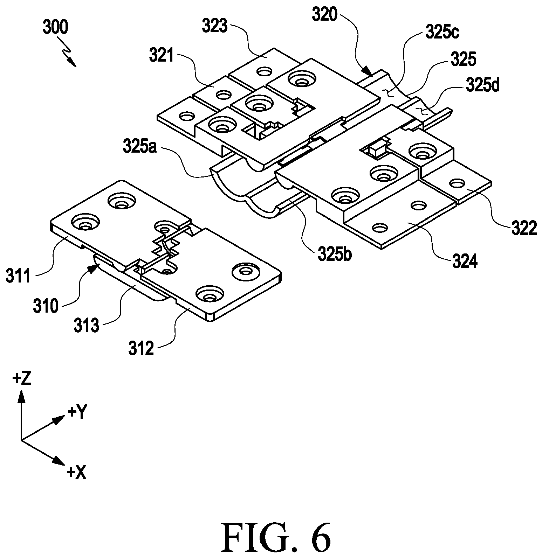

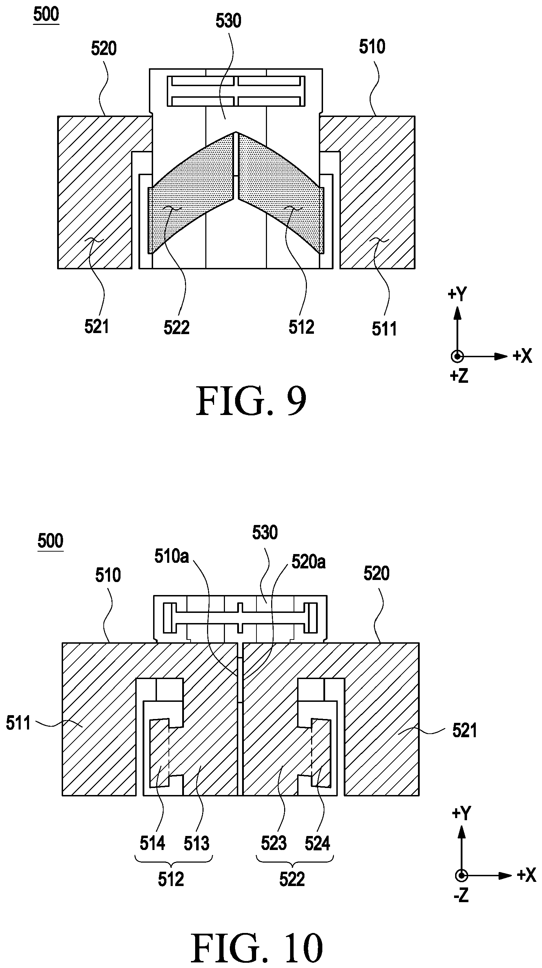

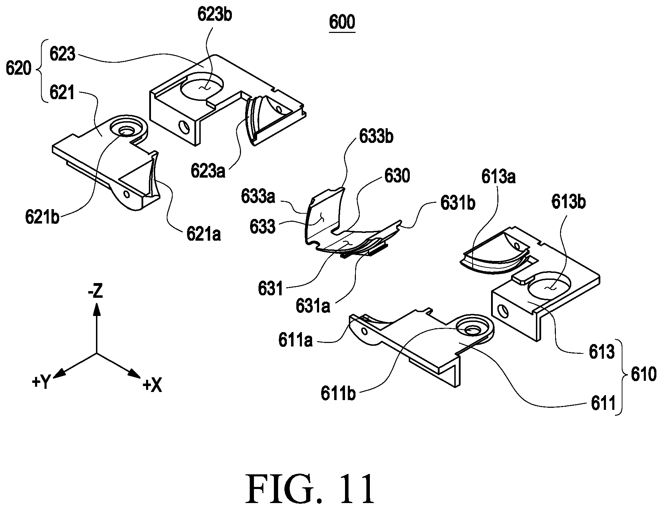

The structure of the hinge structure 300 of the disclosure may be optional. For example, the hinge structure 300 may have the structure shown in FIGS. 6 to 8. As another example, the hinge structure 300 may have the structure shown in FIGS. 9 to 10 or the structure shown in FIG. 11. However, the structure of the hinge structure 300 is not limited to the embodiments described in the disclosure. For example, if the hinge structure 300 includes a plurality (e.g., three) hinges, the hinges (e.g., the first hinge 300a, the second hinge 300b, and/or the third hinge 300c) of the hinge structure 300 may be changed in design.

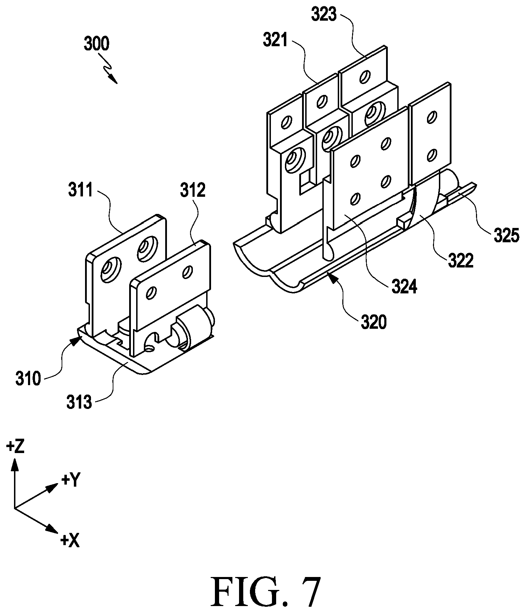

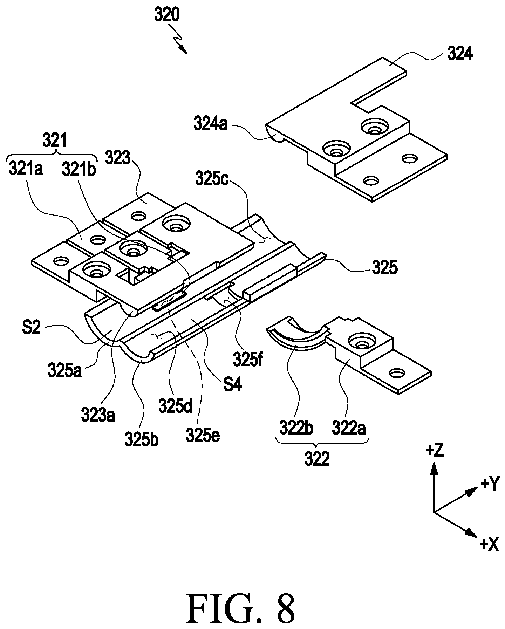

FIGS. 6 to 8 are views illustrating a hinge structure according to an embodiment of the disclosure. For example, FIG. 6 is a perspective view illustrating a hinge structure in an unfolded state according to an embodiment of the disclosure. FIG. 7 is a perspective view illustrating a hinge structure in a folded state according to an embodiment of the disclosure. FIG. 8 is an exploded perspective view illustrating a hinge structure according to an embodiment of the disclosure.

Referring to FIG. 6, 7, and/or 8, the hinge structure 300 may include a plurality of components that constitute a rotating structure 310 and an interlocking structure 320. The configuration of the hinge structure 300 of FIG. 6, 7, and/or 8 may be identical in whole or part to the configuration of the hinge structure 300 of FIG. 5. For example, the first hinge 300a and second hinge 300b of FIG. 5 may include the rotating structure 310 and interlocking structure 320 of FIGS. 6 and 7. The third hinge 300c of FIG. 5 may include the interlocking structure 320 of FIGS. 6 to 8. As another example, the third hinge 300c of FIG. 5 may include the rotating structure 310 and interlocking structure 320 of FIGS. 6 to 8.

According to an embodiment, the rotating structure 310 may substantially implement or guide a rotating operation of the first housing (e.g., the first housing 210 of FIG. 3) and/or the second housing (e.g., the second housing 220 of FIG. 3). The rotating structure 310 may include a first rotating member 311, a second rotating member 312 and a rotating bracket 313. According to an embodiment, the first rotating member 311 may be connected to the first housing (e.g., the first housing 210 of FIG. 4). The second rotating member 312 may be connected to the second housing (e.g., the second housing 220 of FIG. 4). According to an embodiment, the rotating bracket 313 may be disposed in the receiving recess 241 of the hinge cover 240.

According to an embodiment, the rotating bracket 313 may receive the first rotating member 311 and the second rotating member 312. For example, the rotating bracket 313 may include a rotating recess (e.g., the first rotating space 313a of FIG. 8) formed to rotate about the first rotational axis Ax1 and a rotating recess (e.g., the second rotating space 313b of FIG. 8) formed to rotate about the second rotational axis Ax2. According to an embodiment, the first rotating member 311 may be received in the first rotating space 313a and rotate about the first rotational axis Ax1. The second rotating member 312 may be received in the second rotating space 313b and rotate about the second rotational axis Ax2. According to an embodiment, the folding axis (e.g., the folding axis A of FIG. 2) of the electronic device 101 may be denoted as a virtual axis between the first rotational axis A1 and the second rotational axis Ax2.

According to an embodiment, the interlocking structure 320 may interlock the rotation of the first housing 210 with the rotation of the second housing 220. The interlocking structure 320 may transfer at least a portion of the force applied to the first housing 210 to the second housing 220 or transfer at least a portion of the force applied to the second housing 220 to the first housing 210. For example, the interlocking structure 320 may rotate the second housing 220 at substantially the same angle as the angle at which the first housing 210 is rotated, using a spiral rotating member (e.g., the first spiral rotating member 321 or second spiral rotating member 322 of FIG. 6) and the slide member 325. According to an embodiment, the interlocking structure 320 may be connected with the first housing 210 and the second housing 220. For example, the first spiral rotating member (e.g., the first spiral rotating member 321 of FIG. 6) of the interlocking structure 320 may be connected or coupled with the first housing 210. The second spiral rotating member (e.g., the second spiral rotating member 322 of FIG. 6) may be connected or coupled with the second housing 220.

According to an embodiment, the interlocking structure 320 may include a first spiral rotating member 321, a second spiral rotating member 322, and a slide member 325. The first spiral rotating member 321 may be connected to or coupled with the first housing (e.g., the first housing 210 of FIG. 4). The second spiral rotating member 322 may be connected to or coupled with the second housing (e.g., the second housing 220 of FIG. 4). For example, the first spiral rotating member 321, along with the first housing 210, may rotate about the first rotational axis Ax1. The second spiral rotating member 322, along with the second housing 220, may rotate about the second rotational axis Ax2. According to an embodiment, the slide member 325 may not be directly coupled to the first housing 210 and/or the second housing 220.

According to an embodiment, the slide member 325 may receive the first spiral rotating member 321 and the second spiral rotating member 322. According to an embodiment, the slide member 325 may include a first through hole 325e for receiving at least a portion of the first spiral rotating member 321 and a second through hole 325f for receiving at least a portion of the second spiral rotating member 322.

According to an embodiment, the first spiral rotating member 321 may include a first bracket 321a connected with the first housing (e.g., the first housing 210 of FIG. 4) and a first spiral rotating bracket 321b extending from the first bracket 321a and configured to rotate in the first through hole 325e. For example, in the unfolded state (e.g., FIG. 5) of the hinge structure 300, the first spiral rotating bracket 321b may be positioned in the first through hole 325e and, in the folded state (e.g., FIG. 6) of the hinge structure 300, at least a portion of the first spiral rotating bracket 321b may be exposed to the outside of the first through hole 325e.

According to an embodiment, the second spiral rotating member 322 may include a second bracket 322a connected with the second housing (e.g., the second housing 220 of FIG. 4) and a second spiral rotating bracket 322b extending from the second bracket 322a and configured to rotate in the second through hole 325f. For example, in the unfolded state (e.g., FIG. 7) of the hinge structure 300, the second spiral rotating bracket 322b may be positioned in the second through hole 325f and, in the folded state (e.g., FIG. 6) of the hinge structure 300, at least a portion of the second spiral rotating bracket 322b may be exposed to the outside of the second through hole 325f. According to an embodiment, the structure of the first bracket 321a and the first spiral rotating bracket 321b of the first spiral rotating member 321 may be identical in whole or part to the structure of the second bracket 322a and the second spiral rotating bracket 322b of the second spiral rotating member 322. For example, the first bracket 321a may be formed to correspond to the structure of the second bracket 322a. The first spiral rotating bracket 321b may be formed to correspond to the structure of the second spiral rotating bracket 322b.

According to an embodiment, the interlocking structure 320 may include a first guide member 323 and a second guide member 324. According to an embodiment, the first guide member 323 may be connected to the first housing (e.g., the first housing 210 of FIG. 4). The second guide member 324 may be connected to the second housing (e.g., the second housing 220 of FIG. 4). For example, the first guide member 323, along with the first housing 210, may rotate about the first rotational axis Ax1. The second guide member 324, along with the second housing 220, may rotate about the second rotational axis Ax2.

According to an embodiment, the guide members 323 and 324 may prevent or reduce escape of the spiral rotating members 321 and 322 from the slide member 325. According to an embodiment, the first guide member 323 may surround at least a portion of the first spiral rotating member 321. For example, the first spiral rotating bracket 321b of the first spiral rotating member 321 may be disposed between the first guide member 323 and the slide member 325. According to an embodiment, the second guide member 324 may surround at least a portion of the second spiral rotating member 322. For example, the second spiral rotating bracket 322b of the second spiral rotating member 322 may be disposed between the second guide member 324 and the slide member 325. According to an embodiment, the first spiral rotating member 321, together with the first guide member 323, may rotate about the slide member 325. The second spiral rotating member 322, together with the second guide member 324, may rotate about the slide member 325.

According to an embodiment, the slide member 325 may include a first area 325a facing the first spiral rotating member 321 and the first guide member 323 and a second area 325b facing the second spiral rotating member 322 and the second guide member 324. According to an embodiment, the first area 325a may include the first through hole 325e. The second area 325b may include the second through hole 325f.

According to an embodiment, the slide member 325 may guide rotation of the first guide member 323 and the second guide member 324. According to an embodiment, the first area 325a of the slide member 325 may include a first recess 355-1 for receiving the first guide member 323. For example, the first recess 355-1 may be a cylindrical recess formed around the first rotational axis Ax1. According to an embodiment, the second area 325b of the slide member 325 may include a second recess 325d for receiving the second guide member 324. For example, the second recess 325d may be a cylindrical recess formed around the second rotational axis Ax2.

According to an embodiment, at least a portion of the first guide member 323 and/or the second guide member 324 may be received in the slide member 325. According to an embodiment, the first guide member 323 may include at least one first protrusion 323a received in a first recess 325c formed in the first area 325a of the slide member 325. The first protrusion 323a may face the first inner surface s2 of the slide member 325. According to an embodiment (e.g., FIG. 8), the first protrusion 323a may be positioned on each of two opposite sides of a portion (e.g., the first spiral rotating bracket 321b of FIG. 6A) of the first spiral rotating member 321. According to another embodiment (not shown), the first protrusion 323a may be positioned on one side of the first spiral rotating bracket 321b. The first recess 325c may guide rotation of the first guide member 323. According to an embodiment, the second guide member 324 may include at least one second protrusion 324a received in a second recess 325d formed in the second area 325b of the slide member 325. The second protrusion 324a may face the second inner surface s4 of the slide member 325. According to an embodiment (e.g., FIG. 8), the second protrusion 324a may be positioned on one side of the second spiral rotating bracket 322b. According to another embodiment (not shown), the second protrusion 324a may be positioned on each of two opposite sides of a portion (e.g., the second spiral rotating bracket 322b) of the second spiral rotating member 322. The second recess 325d may guide rotation of the second guide member 324.

According to an embodiment, the guide members 323 and 324 may be omitted. For example, the hinge cover (e.g., the hinge cover 240 of FIG. 3) may guide the slide of the slide member 325 of the hinge structure 300. According to an embodiment, the first spiral rotating member 321 and the first guide member 323 may be integrally formed with each other. The second spiral rotating member 322 and the second guide member 324 may be integrally formed with each other.

According to an embodiment, the rotating bracket 313 may include a first rotating space and a second rotating space separated from each other. According to an embodiment, the first rotating space may be a space in which the first rotating member 311 is rotatably received or positioned, and the second rotating space may be a space in which the second rotating member 312 is rotatably received or positioned.

According to an embodiment, the slide member 325 may receive the first spiral rotating member 321 and the second spiral rotating member 322. For example, the slide member 325 may include a first through hole 325e for receiving the first spiral rotating bracket 321b of the first spiral rotating member 321 and a second through hole (e.g., the second through hole 325f of FIG. 8) for receiving the second spiral rotating bracket 322b of the second spiral rotating member 322. The first through hole 325e may be a spiral through hole formed around the first rotational axis parallel to the Y axis, and the second through hole 325f may be a spiral through hole formed around the second rotational axis parallel to the first rotational axis. According to an embodiment, the first spiral rotating member 321 and/or the second spiral rotating member 322 may rotate while being in surface contact with the slide member 325. According to an embodiment, the first spiral rotating member 321 may slide in the first through hole (e.g., the first through hole 325e of FIG. 7). According to an embodiment, the second spiral rotating member 322 may slide in the second through hole (e.g., the second through hole 325f of FIG. 7).

FIGS. 9 and 10 are views illustrating a hinge structure according to an embodiment of the disclosure. For example, FIG. 9 is a top view illustrating a hinge structure according to an embodiment of the disclosure. FIG. 10 is a rear view illustrating a hinge structure according to an embodiment of the disclosure.

Referring to FIG. 9 and/or 10, the hinge structure 500 may include a first spiral rotating member 510, a second spiral rotating member 520, and a slide member 530. The configuration of the hinge structure 500 of FIG. 9 and/or FIG. 10 may be identical in whole or part to the configuration of the hinge structure 300 of FIG. 5. For example, the configuration of the first spiral rotating member 510, the second spiral rotating member 520, and the slide member 530 of FIG. 9 and/or FIG. 10 may be identical in whole or part to the configuration of the first spiral rotating member 321, the second spiral rotating member 322, and the slide member 325 of the interlocking structure 320 of FIG. 6, 7, and/or 8. The configuration of the hinge structure 500 of FIGS. 9 and 10 may be identical in whole or part to the configuration of the hinge structure 300c of FIG. 5.

According to an embodiment, the slide member 530 may receive the first spiral rotating member 510 and the second spiral rotating member 520. According to an embodiment, the slide member 530 may be slid in the length direction (e.g., Y-axis direction) of the hinge structure 500 based on rotation of the first spiral rotating member 510 or the second spiral rotating member 520. According to an embodiment, the first spiral rotating member 510 may be formed in a substantially symmetrical shape with respect to the second spiral rotating member 520. For example, the first spiral rotating member 510 and the second spiral rotating member 520 may be formed symmetrically with respect to the length direction (e.g., the Y-axis direction) of the hinge structure 500. According to an embodiment, at least a portion (e.g., the first surface 510a of the first spiral rotating member 510) of the first spiral rotating member 510 may face at least a portion (e.g., the second surface 520a of the second spiral rotating member 520) of the second spiral rotating member 520. According to an embodiment, the slide member 530 may include a first through hole and a second through hole (e.g., the second through hole 325f of FIG. 8) symmetrically formed with each other. The first spiral rotating member 510 and the second spiral rotating member 520 may be received in the first through hole and the second through hole 325f, respectively. According to an embodiment, the length of the hinge structure 500 in which the first spiral rotating member 510 and the second spiral rotating member 520 are formed symmetrically may be shorter than the length of a hinge (e.g., the first hinge 300a or second hinge 300b of FIG. 5) in which they are asymmetrically formed.

According to an embodiment, the first spiral rotating member 510 may include a first bracket 511 connected to the first housing (e.g., the first housing 210 of FIG. 2) and a first spiral rotating bracket 512 extending from the first bracket 511 and configured to rotate in the slide member 530. According to an embodiment, the first spiral rotating bracket 512 may include a first spiral rotating rail 513 positioned in a through hole of the slide member 325 and at least one first protruding area 514 extending from the first spiral rotating rail 513.

According to an embodiment, the second spiral rotating member 520 may include a second bracket 521 connected to the second housing (e.g., the second housing 220 of FIG. 1) and a second spiral rotating bracket 522 extending from the second bracket 521 and configured to rotate in the slide member 530. According to an embodiment, the second spiral rotating bracket 522 may include a second spiral rotating rail 523 positioned in a through hole (e.g., the second through hole 325f of FIG. 7) of the slide member 530 and at least one second protruding area 524 extending from the second spiral rotating rail 523. The configuration of the second bracket 521, the second spiral rotating bracket 522, the second spiral rotating rail 523, and the second protruding area 524 of FIG. 9 and/or 10 may be identical in whole or part to the configuration of the first bracket 511, the first spiral rotating bracket 512, the first spiral rotating rail 513, and the first protruding area 514.

FIG. 11 is an exploded perspective view illustrating a hinge structure according to an embodiment of the disclosure.

Referring to FIG. 11, a hinge structure 600 may include a first spiral rotating member 610, a second spiral rotating member 620, a slide member 630, and/or a hinge bracket 640. The configuration of the hinge structure 600, the first spiral rotating member 610, the second spiral rotating member 620 of FIG. 11 may be identical in whole or part to the configuration of the first spiral rotating member 321, the second spiral rotating member 322, and the slide member 325 of the interlocking structure 320 of FIG. 6, 7, and/or 8. The configuration of the hinge structure 600 of FIG. 11 may be identical in whole or part to the configuration of the hinge structure 300c of FIG. 5.

According to an embodiment, the first spiral rotating member 610 and/or the second spiral rotating member 620 may receive at least a portion of the slide member 630. For example, the first spiral rotating member 610 may surround at least a portion (e.g., the first slide area 631) of the slide member 630. The second spiral rotating member 620 may surround at least a portion (e.g., the second slide area 633) of the slide member 630. According to an embodiment, the first spiral rotating member 610 and/or the second spiral rotating member 620 may guide the slide member 630. For example, the first spiral rotating member 610 may include a fifth surface 611a facing the first slide area 631 and a sixth surface 613a facing the first slide area 631 and substantially parallel to the fifth surface 611a. The second spiral rotating member 620 may include a seventh surface 621a facing the second slide area 633 and an eighth surface 623a facing the second slide area 633 and substantially parallel to the seventh surface 621a.

According to an embodiment, an empty space between the fifth surface 611a and the sixth surface 613a may have substantially the same configuration as the through hole (e.g., the second through hole 325f of FIG. 8). For example, the configuration of the first spiral rotating member 610 may be identical in whole or part to the configuration of the first area 325a of the slide member 325 of FIG. 8, and the fifth surface 611a and/or the sixth surface 613a may be a spiral surface formed around the first rotational axis Ax1. According to an embodiment, the first spiral rotating member 610 may rotate in a state of being in surface contact with the slide member 630 by the fifth surface 611a and the sixth surface 613a. According to an embodiment, the first spiral rotating member 610 may be connected to the first housing (e.g., the first housing 210 of FIG. 2). For example, the first spiral rotating member 610 may rotate about the first rotational axis Ax1 while being connected to the first housing 210.

According to an embodiment, an empty space between the seventh surface 621a and the eighth surface 623a may have substantially the same configuration as the through hole (e.g., the second through hole 325f of FIG. 8). For example, the configuration of the second spiral rotating member 620 may be identical in whole or part to the configuration of the second area 325b of the slide member 325 of FIG. 8, and the seventh surface 621a and/or the eighth surface 623a may be a spiral surface formed around the second rotational axis Ax2. According to an embodiment, the second spiral rotating member 620 may rotate in a state of being in surface contact with the slide member 630 by the seventh surface 621a and the eighth surface 623a. According to an embodiment, the second spiral rotating member 620 may be connected to the second housing (e.g., the second housing 220 of FIG. 2). For example, the second spiral rotating member 620 may rotate about the second rotational axis Ax2 while being connected to the second housing 220.

According to an embodiment, the first spiral rotating member 610 may be composed of a plurality of components. For example, the first spiral rotating member 610 may include a 1-1th spiral rotating member 611 and a 1-2th spiral rotating member 613 to be fastened with the 1-1th spiral rotating member 611. According to an embodiment, the 1-1th spiral rotating member 611 may include the fifth surface 611a. The 1-2th spiral rotating member 613 may include the sixth surface 613a. According to an embodiment, at least a portion of the 1-1th spiral rotating member 611 may face a portion (e.g., the 3-1th spiral rotating rail 631a) of the first slide area 631. At least a portion of the 1-2th spiral rotating member 613 may face another portion (e.g., the 3-2th spiral rotating rail 631b) of the first slide area 631. According to an embodiment, the 1-1th spiral rotating member 611 may include a first fastening area 611b. The 1-2th spiral rotating member 613 may include a second fastening area 613b that may be connected to the first fastening area 611b. For example, the second fastening area 613b may be formed as a through hole or recess structure. The first fastening area 611b may be inserted into the second fastening area 613b. The first fastening area 611b may include a through hole or recess structure to reduce the weight and/or volume of the hinge structure 600. As another example (not shown), the first fastening area 611b may be formed as a through hole or recess structure. The second fastening area 613b may be inserted into the first fastening area 611b. The second fastening area 613b may include a through hole or recess structure to reduce the weight and/or volume of the hinge structure 600.

According to an embodiment, the second spiral rotating member 620 may be composed of a plurality of components. For example, the second spiral rotating member 620 may include a 2-1th spiral rotating member 621 and a 2-2th spiral rotating member 623 to be fastened with the 2-1th spiral rotating member 621. According to an embodiment, the 2-1th spiral rotating member 621 may include the seventh surface 621a. The 2-2th spiral rotating member 623 may include the eighth surface 623a. According to an embodiment, at least a portion of the 2-1th spiral rotating member 621 may face a portion (e.g., the 4-1th spiral rotating rail 633a) of the second slide area 633. At least a portion of the 2-2th spiral rotating member 623 may face another portion (e.g., the 4-2th spiral rotating rail 633b) of the second slide area 633. According to an embodiment, the 2-1th spiral rotating member 621 may include a third fastening area 621b. The 2-2th spiral rotating member 623 may include a fourth fastening area 623b that may be connected to the third fastening area 621b. For example, the fourth fastening area 623b may be formed as a through hole or recess structure. The third fastening area 621b may be inserted into the fourth fastening area 613b. The third fastening area 621b may include a through hole or recess structure to reduce the weight and/or volume of the hinge structure 600. As another example (not shown), the third fastening area 621b may be formed as a through hole or recess structure. The fourth fastening area 623b may be inserted into the third fastening area 621b. The fourth fastening area 623b may include a through hole or recess structure to reduce the weight and/or volume of the hinge structure 600.

According to an embodiment, the assembly and/or processing convenience of the hinge structure 600 in which the first spiral rotating member 610 and/or the second spiral rotating member 620 includes a plurality of components (e.g., the 1-1th spiral rotating member 611, the 1-2th spiral rotating member 613, the 2-1th spiral rotating member 621, and/or the 2-2th spiral rotating member 623) may be further increased than the assembly and/or processing convenience of the hinge structure using one first spiral rotating member 610 and/or one second spiral rotating member 620.

According to an embodiment, the slide member 630 may include a first slide area 631 connected to the first spiral rotating member 610 and a second slide area 633 connected to the second spiral rotating member 620. According to an embodiment, the first slide area 631 may be disposed between the 1-1th spiral rotating member 611 and the 1-2th spiral rotating member 613. According to an embodiment, the first slide area 631 may include a 3-1th spiral rotating rail 631a facing the 1-1th spiral rotating member 611 and a 3-2th spiral rotating rail 631b facing the 1-2th spiral rotating member 621. According to an embodiment, the second slide area 633 may be disposed between the 2-1th spiral rotating member 621 and the 2-2th spiral rotating member 623. According to an embodiment, the second slide area 633 may include a 4-1th spiral rotating rail 633a facing the 2-1st spiral rotating member 621 and a 4-2th spiral rotating rail 633b facing the 2-2th spiral rotating member 623.

According to an embodiment, the slide member 630 may slide based on the movement of the first spiral rotating member 610 and/or the second spiral rotating member 620. For example, the slide member 630 may include third spiral rotating rails 631a and 631b and/or fourth spiral rotating rails 633a and 633b extending in a curved trajectory. According to an embodiment, force or pressure may be provided to the third spiral rotating rails 631a and 631b of the first slide area 631 as the first spiral rotating member 610 rotates. As the second spiral rotating member 620 rotates, force or pressure may be provided to the fourth spiral rotating rails 633a and 633b of the second slide area 633.

According to an embodiment, the third spiral rotating rails 631a and 631b may face the first spiral rotating member 610. For example, the third spiral rotating rails 631a and 631b may include a 3-1th spiral rotating rail 631a configured to slide based on the rotation of the fifth surface 611a of the 1-1th spiral rotating member 611 and a 3-2th spiral rotating rail 631b configured to slide based on the rotation of the sixth surface 613a of the 1-2th spiral rotating member 613. According to an embodiment, the 3-1th spiral rotating rail 631a may be formed to be substantially parallel to the 3-2th spiral rotating rail 631b.

According to an embodiment, the fourth spiral rotating rails 633a and 633b may face the second spiral rotating member 620. For example, the fourth spiral rotating rails 633a and 633b may include a 4-1th spiral rotating rail 633a configured to slide based on the rotation of the seventh surface 621a of the 2-1st spiral rotating member 621 and a 4-2th spiral rotating rail 633b configured to slide based on the rotation of the eighth surface 623a of the 2-2th spiral rotating member 623. According to an embodiment, the 4-1th spiral rotating rail 633a may be formed to be substantially parallel to the 4-2th spiral rotating rail 633b.

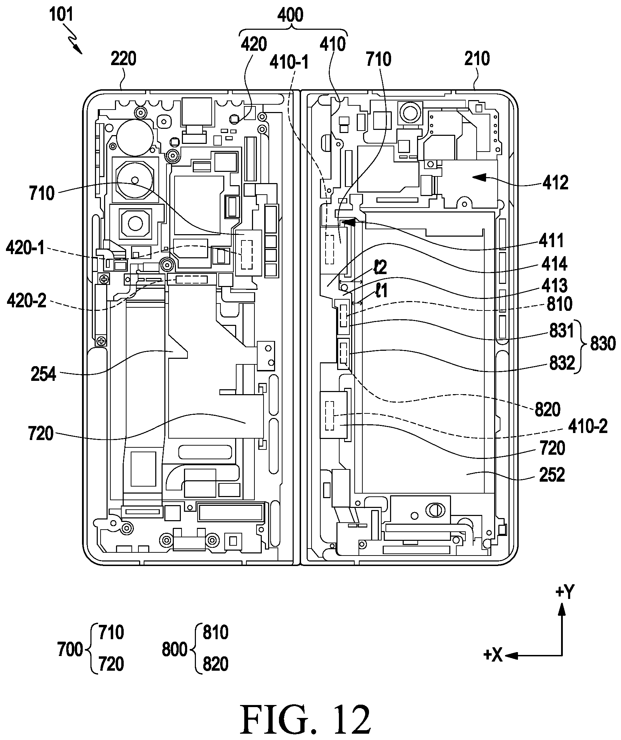

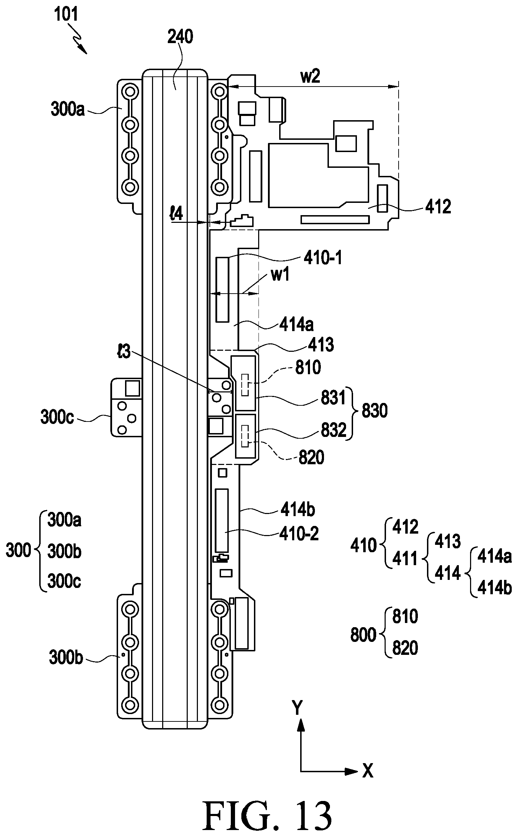

FIG. 12 is a rear view illustrating an electronic device except for a rear plate and a hinge assembly according to an embodiment of the disclosure. FIG. 13 is a rear view illustrating an electronic device including a hinge structure, a hinge cover, and a first circuit board according to an embodiment of the disclosure.

Referring to FIGS. 12 and 13, an electronic device 101 may include a first housing 210, a second housing 220, a hinge cover 240, a hinge structure 300, a board unit 400, and a connecting structure 700. The configuration of the first housing 210, the second housing 220, the hinge cover 240, the hinge structure 300, the board unit 400, and the connecting structure 700 of FIG. 12 and/or FIG. 13 may be identical in whole or part to the configuration of the first housing 210, the second housing 220, the hinge cover 240, the hinge structure 300, the board unit 260, and the flexible circuit board 266 of FIG. 4 and/or FIG. 5. It is emphasized that at least one (e.g., the connecting structure 700) of the components may be omitted from the electronic device 101, or one or more other components may be added in the electronic device 101.

According to an embodiment, the board unit 400 may include a first circuit board 410 and a second circuit board 420 spaced apart from the first circuit board 410. The first circuit board 410 may be positioned in the first housing 210. The second circuit board 420 may be positioned in the second housing 220.

According to an embodiment, the first circuit board 410 may have a structure in which the width differs for each area. For example, the first circuit board 410 may include an extension area 411 at least a portion of which is positioned between the third hinge 300c and the first battery 252 and a main area 412 extending from the extension area 411 and adjacent to an upper portion of the first housing 210. According to an embodiment, the main area 412 may be disposed or seated on a first supporting area (e.g., the first supporting area 212 of FIG. 4) of the first housing 210. The first supporting area 212 may be formed to be substantially flat. The first width w1 of the extension area 411 may be shorter than the second width w2 of the main area 412. For example, the extension area 411 may be referred to as a portion of the first circuit board 410 that extends or protrudes from the main area 412. According to an embodiment, the extension area 411 may have a shape extending along the length direction (Y-axis direction) of the hinge structure 300 and/or the electronic device 101. According to an embodiment, the shape of the first circuit board 410 may be referred to as an ax shape or a ladle shape. According to an embodiment, the extension area 411 may be referred to as a neck end or a protrusion of the first circuit board 410. The main area 412 may be referred to as a main portion of the first circuit board 410.

According to an embodiment, the first circuit board 410 may surround at least a portion of the first battery 252. For example, at least a portion of the extension area 411 of the first circuit board 410 may be positioned on a side surface (e.g., in the X-axis direction) of the first battery 252. At least a portion of the main area 412 of the first circuit board 410 may be positioned above the first battery 252 (e.g., in the Y-axis direction).

According to an embodiment, the first circuit board 410 may include connectors 410-1 and 410-2 for electrical connection with the second circuit board 420. For example, the first circuit board 410 may include a first connector 410-1 configured to be coupled to the first connection member 710 and a second connector 410-2 configured to be coupled to the second connection member 720. According to an embodiment, the first circuit board 420 may include connectors 420-2 and 420-1 for electrical connection with the second circuit board 410. For example, the second circuit board 420 may include a third connector 420-1 configured to be coupled to the first connection member 710 and a fourth connector 420-2 configured to be coupled to the second connection member 720.

According to an embodiment, the first connector 410-1 and the second connector 410-2 may be disposed in the extension area 411 of the first circuit board 401. Since the first connector 410-1 and the second connector 410-2 are positioned in the extended area 411 closer to the second housing 220 than the main area 412 is, the length of the electrical path of the first circuit board 410 and the second circuit board 420 may be reduced.

According to an embodiment, the extension area 411 may extend along a side surface of the battery (e.g., the first battery 252). According to an embodiment, the extension area 411 may include a first area 413 having at least a portion positioned between the third hinge 300c and the first battery 252 and a second area 414 extending along the hinge cover 240 in the length direction (Y-axis direction) of the electronic device 101.

According to an embodiment, the first circuit board 410 may be formed to correspond to the structure of the third hinge 300c. For example, at least a portion of the extension area 411 of the first circuit board 410 may be bent. According to an embodiment, the first distance 11 between the first area 413 and the first battery 252 may be shorter than the second distance 12 between the second area 414 and the first battery 252. According to an embodiment, the third distance 13 between the first area 413 and the hinge cover 240 may be longer than the fourth distance 14 between the second area 414 and the hinge cover 240. According to an embodiment, the second area 414 may include a plurality of divided areas 414a and 414b. For example, the second area 414 may include a 2-1th area 414a positioned between the main area 412 and the first area 413 and a 2-2th area 414b extending from the first area 413 downward (e.g., -Y direction) of the electronic device 101. According to an embodiment, the extension area 411 may have a stepped shape. For example, the second area 414 may be referred to as a stepped structure with respect to the first area 413.

According to an embodiment, the electronic device 101 may include a shielding member 830 to reduce electromagnetic interference (EMI) caused by the signal generated from an electronic component (e.g., the electronic component 800 of FIG. 13). According to an embodiment, the shielding member 830 may be a shield can include a metal plate. According to an embodiment, the shielding member 830 may include a first shielding member 831 surrounding at least a portion of the first electronic component 810 and a second shielding member 832 surrounding at least a portion of the second electronic component 820. According to an embodiment, the shielding member 830 may reduce damage to the electronic component 800.

According to an embodiment, the capacity and/or size of the first battery 252 may be increased by receiving the at least one electronic component 800 in the second area 414 of the first circuit board 410. For example, since the at least one electronic component 800 is positioned between the third hinge 300c and the first battery 252, the width (length in the X-axis direction) of the extension area 411 of the first circuit board 410may be reduced, and the width (e.g., length in the X-axis direction) of the first battery 252 may be increased.

According to an embodiment, the connecting structure 700 may electrically connect the first circuit board 410 and the second circuit board 420. The connecting structure 700 may include a first connection member 710 connected to the first connector 410-1 of the first circuit board 410 and the third connector 420-1 of the second circuit board 420 and a second connection member 720 connected to the second connector 410-2 of the first circuit board 410 and the fourth connector 420-2 of the second circuit board 420. According to an embodiment, the connecting structure 700 may cross the hinge cover 240, and one end of the connecting structure 700 may be positioned within the first housing 210, and the other end thereof may be positioned within the second housing 220. According to an embodiment, the third hinge 300c may be positioned between the first connection member 710 and the second connection member 720.

According to an embodiment, the structures described in FIG. 12 and/or 13 may be used together with previously described structures. For example, the third hinge 300c of FIG. 12 and/or 13 may be one of the interlocking structure 320 of FIGS. 6 to 8, the hinge structure 500 of FIGS. 9 and 10, or the hinge structure 600 of FIG. 11.

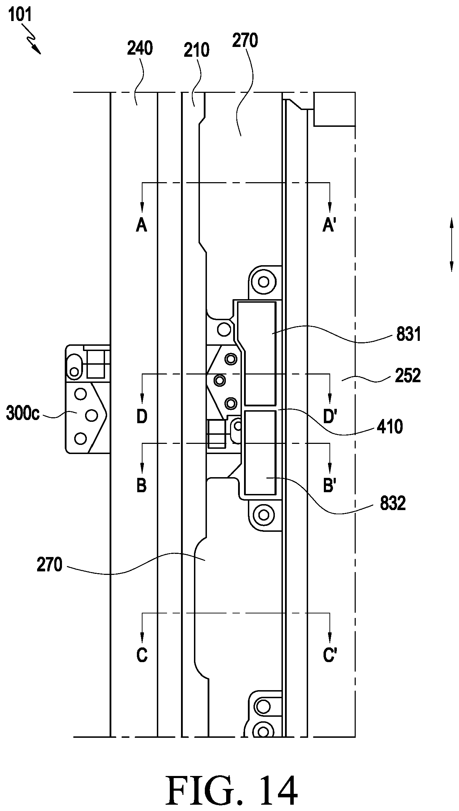

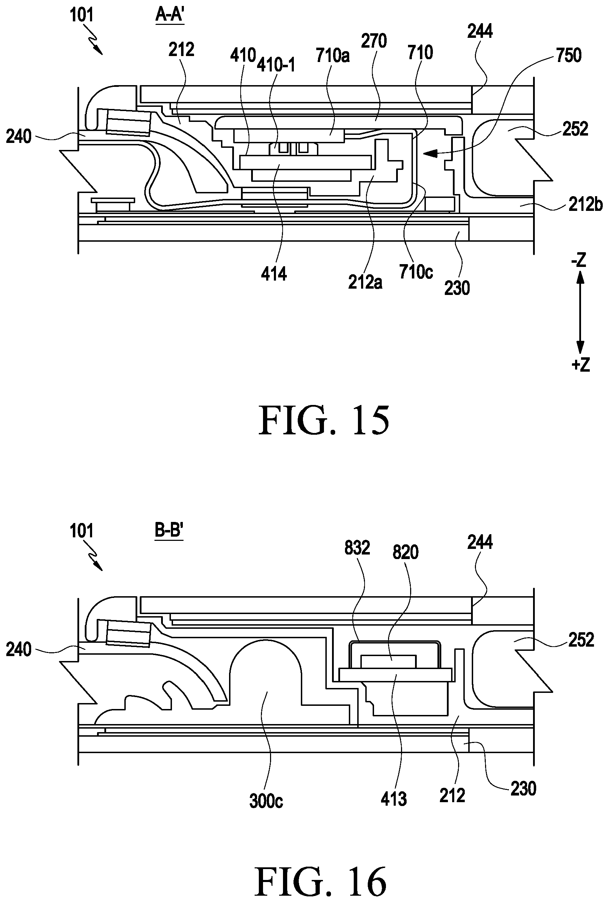

FIG. 14 is a rear view illustrating an electronic device according to an embodiment of the disclosure. FIG. 15 is a cross-sectional view taken along line A-A' of FIG. 14 of the disclosure. FIG. 16 is a cross-sectional view taken along line B-B' of FIG. 14 of the disclosure. For example, the electronic device 101 of FIG. 14 may include a rear member 270 covering the first connection member 710 and the first connector 410-1 of FIG. 12. FIG. 15 illustrates a cross section of the electronic device 101 including the rear member 270, the first connection member 710, and the first connector 410-1.

Referring to FIG. 14, 15 and/or 16, the electronic device 101 may include a first housing 210, a hinge cover 240, a third hinge 300c, a first circuit board 410, and a connecting structure 700, an electronic component 800, and a shielding member 830. The configuration of the first housing 210, the hinge cover 240, the third hinge 300c, the first substrate 410, the connecting structure 700, and the shielding member 830 of FIG. 14, 15, and/or 16 may be identical in whole or part to the configuration of the first housing 210, the hinge cover 240, the third hinge 300c, the first substrate 410, the connecting structure 700, and the shielding member 830 of FIG. 12 and/or 13.

According to an embodiment, the first housing 210 may receive the first circuit board 410 and the first battery 252. For example, the first circuit board 410 and the first battery 252 may be connected or attached to the first supporting area 212 of the first housing 210. According to an embodiment, the first supporting area 212 may include a first supporting portion 212a supporting a portion (e.g., the first area 413) of the first circuit board 410 and a second supporting portion 212b supporting the first battery 252.

According to an embodiment, the rear member 270 may cover at least a portion of the first circuit board 410 and/or at least a portion of the second circuit board 420. According to an embodiment, the rear member 270 may support the sub display 244. For example, the rear member 270 may be positioned in a space surrounded by the first circuit board 410, the sub display 244, the hinge cover 240 and the first battery 252. According to an embodiment, the rear member 270 may surround at least a portion of the shielding member 830. The rear member 270 may be positioned on the first area 413 of the first circuit board 410. For example, the rear member 270 may be positioned between the rear plate (e.g., the first rear plate 280 and/or second rear plate 290 of FIG. 4) of the first housing 210 and/or the sub display 244 and first circuit board 410. According to an embodiment, the size of the rear member 270 may be reduced due to the shielding member 830. As the size of the rear member 270 is reduced, the weight of the electronic device 101 may be reduced.

According to an embodiment, the first connection member 710 may electrically connect the first circuit board 410 to the second circuit board (e.g., the second circuit board 420 of FIG. 12) while being connected to the first connector 410-1. For example, the first connection member 710 may extend from the first connector 410-1 to the second circuit board 420 through the hinge cover 240.

According to an embodiment, the first connection member 710 may surround at least a portion (e.g., the second area 414) of the first circuit board 410. For example, the first connection member 710 may include a first end 710a connected to the first connector 410-1 of the first circuit board 410, a second end (not shown) positioned opposite to the first end 710a and connected to the second connector (e.g., the third connector 410-3 of FIG. 12), and a body portion 710c positioned between the first end 710a and the second end and having at least a portion positioned between the first supporting portion 212a and the second supporting portion 212b.

According to an embodiment, the electronic device 101 may include a waterproofing member 750 to reduce the inflow of external moisture or foreign objects. The waterproofing member 750 may prevent moisture from entering the connector (e.g., the first connector 410-1 and/or the second connector 410-2) of the first circuit board 410. For example, the waterproofing member 750 may be positioned in a space between the second area 414 of the first circuit board 410 and the first battery 252. The waterproofing member 750 may include a first waterproofing member surrounding at least a portion of the first connector 410-1 and/or the first connection member 710 and a second waterproofing member surrounding at least a portion of the second connector 410-2 and/or the second connection member 710.

According to an embodiment, the waterproofing member 750 may be an adhesive that is hardened after being inserted into the electronic device 101 in a fluid state. For example, the waterproofing member 750 may be a cured in place gasket (CIPG).

According to an embodiment, the size and/or capacity of the first battery 252 may be increased due to the structure of the first circuit board 410 and the waterproofing member 750. For example, the first circuit board 410 may include a curved extension area 411 corresponding to the shape of the third hinge 300c. The waterproofing member 750 may be positioned in the second area 414 of the extension area 411. As the waterproofing member 750 is positioned on substantially the same line as the first area 413 of the extension area 411 with respect to the width direction of the electronic device 101, the widthwise (X-axis direction) length of the first battery 252 may be increased.

According to an embodiment, at least one electronic component 800 may be disposed in the second area 414 of the first circuit board 410. According to an embodiment, the first circuit board 410 may include a first electronic component 810 and a second electronic component 820 different from the first electronic component 810. According to an embodiment, the electronic component 800 may be positioned between the third hinge 300c and the first battery 252. According to an embodiment, as the first electronic component 810 and the second electronic component 820 are mounted in the second area 414 positioned between the third hinge 300c and the first battery 252, the space of the electronic device 101 may be efficiently used. In an embodiment, the first electronic component 810 may be a communication module. The second electronic component 820 may be a speaker module. However, the configuration of the first electronic component 810 and the second electronic component 820 is optional. For example, the first electronic component 810 may be a speaker module, and the second electronic component 820 may be a communication module.

According to an embodiment, the configuration of the second connection member (e.g., the second connection member 720 of FIG. 12) and the second waterproofing member (not shown) may include the configuration of the first connection member 710 and the first waterproofing member 750. For example, the description of the first connection member 710 and the first waterproofing member 750 positioned on the A-A' cross section of FIG. 14 may apply to the second connection member (e.g., the second connection member 720 of FIG. 13) and the second waterproofing member positioned on the C-C' cross section of FIG. 14.

According to an embodiment, the configuration of the first electronic component 810 and the first shielding member 831 may correspond to the configuration of the second electronic component 820 and the second shielding member 832. For example, the description of the second electronic component 820 and the second shielding member 832 positioned on the B-B' cross section of FIG. 14 may be applied to the first electronic component (e.g., the first electronic component 810 of FIG. 13) and the first shielding member (e.g., the first shielding member 831 of FIG. 13).

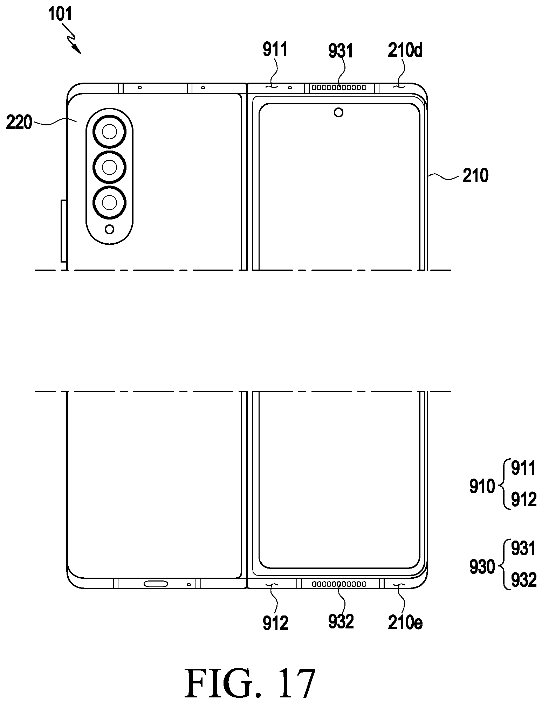

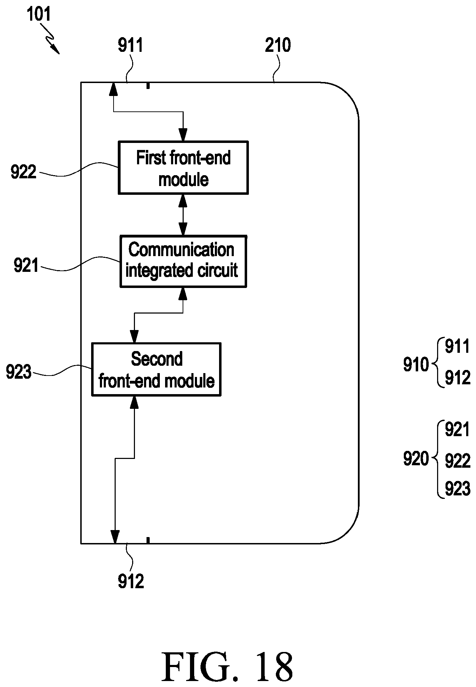

FIG. 17 is a perspective view illustrating an electronic device including an antenna structure and a speaker hole according to an embodiment of the disclosure. FIG. 18 is a circuit diagram illustrating an electronic device including a communication module according to an embodiment of the disclosure.

Referring to FIG. 17 and/or 18, an electronic device 101 may include a first housing 210, a second housing 220, an antenna module 910, a communication module 920, and a speaker module 930.

The configuration of the first housing 210 and the second housing 220 of FIG. 17 and/or 18 may be identical in whole or part to the configuration of the first housing 210 and the second housing 220 of FIG. 2. The configuration of the antenna module 910, the communication module 920, and the speaker module 930 of FIG. 17 and/or 18 may be identical in whole or part to the configuration of the antenna module 197 of FIG. 1, the antenna 275 of FIG. 4, and the sound output module 155 of FIG. 1.

According to an embodiment, the electronic device 101 may include an antenna module 910 forming at least a portion of the housing (e.g., the first housing 210). For example, at least a portion of the antenna module 910 may be exposed to the outside of the electronic device 101 and may communicate with an external electronic device or a server. According to an embodiment, the antenna module 910 may include a first antenna 911 having at least a portion positioned on an upper portion 210d of the first housing 210 and a second antenna 912 having at least a portion positioned on a lower portion 210e of the first housing 210. For example, the first antenna 911 may be referred to as a portion of a conductor (e.g., metal) of the upper portion 210d of the first housing 210. The second antenna 912 may be referred to as a portion of a conductor (e.g., metal) of the lower portion 210e of the first housing 210. According to an embodiment, the first antenna 911 and/or the second antenna 912 may be an antenna for Wi-Fi communication.

According to an embodiment, the electronic device 101 may include speaker holes 931 and 932 for transferring at least a portion of output sound to the outside. According to an embodiment, the speaker holes 931 and 932 may include a first speaker hole 931 positioned on the upper portion 210d of the first housing 210 and/or a second speaker hole 932 positioned on the lower portion 210e of the first housing 210. According to an embodiment, the first speaker hole 931 may be positioned adjacent to the first speaker module (e.g., the first speaker module 208a of FIG. 4) and may provide the sound or vibration generated by the first speaker module 208a to the outside of the electronic device 101. The second speaker hole 932 may be positioned adjacent to the second speaker module (e.g., the second speaker module 208b of FIG. 4) and may provide the sound or vibration generated by the second speaker module 208b to the outside of the electronic device 101.

According to an embodiment, the electronic device 101 may include a communication module 920 capable of communicating with the outside through the first antenna 911 and/or the second antenna 912. The communication module 920 may include a communication integrated circuit (IC) 921, a first front end module (FEM) 922 and a second front end module 923. The communication integrated circuit 921 may be an integrated circuit for performing a designated communication method (e.g., Wi-Fi communication). The front-end modules 922 and 923 may include circuits (e.g., filters, switches, and/or amplifiers) for performing RF communication (e.g., Wi-Fi communication). According to an embodiment, the front-end modules 922 and 923 may be components that set at least one band among a plurality of frequency bands in one antenna (e.g., the first antenna 911 or the second antenna 912) to perform communication. For example, the first front-end module 922 and the second front-end module 923 may be a single front-end module. According to an embodiment, the first front-end module 922 may transfer the signal generated by the communication integrated circuit 921 to the first antenna 911 or transfer the electrical signal received from the first antenna 911 to the communication integrated circuit 921. The second front-end module 923 may transfer the signal generated by the communication integrated circuit 921 to the second antenna 912 or transfer the electrical signal received from the second antenna 912 to the communication integrated circuit 921.

According to an embodiment, at least a portion of the communication module 920 may be positioned in a space between the third hinge 300c and the first battery 252. For example, the second front end module 923 may be disposed between the third hinge 300c and the first battery 252. As the second front-end module 923 is positioned between the third hinge 300c and the first battery 252, component layout of the electronic device 101 may be optimized. For example, as the second front-end module 923 is disposed in the position where connector mounting is not easy due to the third hinge 300c, it is possible to efficiently use the space of the electronic device 101 and increase the size of the first battery 252. According to an embodiment, antenna performance of the electronic device 101 may be enhanced due to the position of the second front-end module 923. For example, as the second front-end module 923 is positioned between the third hinge 300c and the first battery 252, the distance between the second front-end module 923 and the second antenna 912 may be reduced, and the efficiency of the second antenna 912 may be increased. For example, the electronic device 101 including the first front-end module 922 and the second front-end module 923 of the disclosure may have higher antenna efficiency than an electronic device 101 using one front-end module (e.g., a dual-front end module) connected with two antennas (e.g., the first antenna 911 and the second antenna 912).

The structure in which the second front-end module 923 is disposed between the third hinge 300c and the first battery 252 is optional. For example, in an embodiment, the first front-end module 922 may be positioned between the third hinge 300c and the first battery 252.

According to an embodiment, at least a portion of the speaker module (e.g., the sound output module 155 of FIG. 1) may be disposed between the third hinge 200c and the first battery 252. As the speaker module is positioned between the third hinge 300c and the first battery 252, component layout of the electronic device 101 may be optimized. For example, as the distances between the speaker module and the speaker holes 931 and 932 reduce, the quality of the sound output from the electronic device 101 may be enhanced.

The structure of the electronic device 101 described in FIG. 17 and/or 18 may be used together with the structure of the electronic device 101 described above in the disclosure. For example, the configuration of the antenna module 910, communication module 920, and speaker module 930 of FIG. 17 and/or 18 may be optionally applied to the electronic device 101 including the third hinge 300c, the board unit 400, the electronic component 800, and/or the shielding member 830 of FIG. 12 and/or 13.

According to an embodiment, the type of electronic component (e.g., the first electronic component 810 and/or the second electronic component 820) described in the disclosure is not limited to the communication module 920. For example, any electronic component capable of optimizing space utilization of the electronic device 200 may be positioned between the third hinge 300c and a battery (e.g., the first battery 252 of FIG. 12). According to an embodiment, the first electronic component 810 and/or the second electronic component 820 may include a sound output module (e.g., the sound output module 155 of FIG. 1), an analog integrated circuit, a sensor module (e.g., the sensor module 176 of FIG. 1) and/or a power management module (e.g., the power management module 188 of FIG. 1).

An electronic device (e.g., a portable terminal) includes a display with a flat surface or both a flat and curved surface. An electronic device including a display may have a limitation in realizing a screen larger than the size of the electronic device due to the fixed display structure. Accordingly, research has been conducted on electronic devices including a foldable display. However, a hinge structure is required to implement a foldable electronic device. The hinge structure may limit design of the board.

In an embodiment of the disclosure, there may be provided a board unit including an extension area bent to correspond to the central hinge (e.g., the third hinge). As the extension area is bent, internal components of the electronic device may be efficiently arranged. As components of the electronic device are efficiently arranged, the capacity and size of the battery may be enhanced.

As the communication module is mounted on the substrate positioned between the central hinge and the battery, the distance between the communication module and the antenna is reduced, communication performance may be enhanced. As the speaker module is mounted on the substrate positioned between the central hinge and the battery, the distance between the speaker module and the speaker hole (or amplifier) is reduced, acoustic performance may be enhanced.

The disclosure is not limited to the foregoing embodiments but various modifications or changes may rather be made thereto without departing from the scope of the present invention as defined by the appended set of claims.

It is apparent to one of ordinary skill in the art that the foldable electronic device including a circuit board as described above are not limited to the above-described embodiments and those shown in the drawings, and various changes, modifications, or alterations may be made thereto without departing from the scope of the present invention as defined by the appended set of claims.

## Claims

1. An electronic device (101) comprising:
a housing (201) including a first housing (210) and a second housing (220);
a display (230) disposed on the first housing (210) and the second housing (220);
a hinge structure (300; 500; 600) configured to connect the first housing (210) and the second housing (220) and including a first hinge (300a), a second hinge (300b), and a third hinge (300c) positioned between the first hinge (300a) and the second hinge (300b);
a battery (252) disposed in the first housing (210);
a board unit (260; 400) including a first circuit board (262; 410) disposed in the first housing (210) and a second circuit board (264; 420) disposed in the second housing (220), wherein the first circuit board (262; 410) includes a main area (412) and an extension area (411), wherein the main area (412) is at least partially positioned on an upper portion of the battery (252) and has a second width (w2), and wherein the extension area (411) has a shape extending from the main area (412) along a longitudinal direction of the hinge structure (300; 500; 600) and has a first width (w1) shorter than the second width (w2);
a connecting structure (700) configured to electrically connect the first circuit board (262; 410) and the second circuit board (264; 420) and including a first connection member (710) and a second connection member (720);
**characterised in that** the first connection member (710) is at least partially positioned between the first hinge (300a) and the third hinge (300c) and **in that** the second connection member (720) is at least partially positioned between the second hinge (300b) and the third hinge (300c), wherein the third hinge (300c) is positioned between the first connection member (710) and the second connection member (720); and
**in that** the electronic device (101) further comprises at least one electronic component (800) positioned between the third hinge (300c) and the battery (252) and disposed on the extension area (411).

2. The electronic device (101) of claim 1, wherein the extension area (411) includes a first area (413) being at least partially positioned between the third hinge (300c) and the battery (252) and a second area (414) including a 2-1th area (414a) positioned between the first area (413) and the main area (412) and including a first connector (410-1)and a 2-2th area (414b) extending downward from the first area (413) along the longitudinal direction of the hinge structure (300; 500; 600) including a second connector (410-2).

3. The electronic device (101) of claim 2,
wherein a first distance between the first area (413) and the battery (252) is shorter than a second distance between the second area (414) and the battery (252), and
a third distance between the first area (413) and a hinge cover 240 is longer than a fourth distance between the second area (414) and the hinge cover 240.

4. The electronic device (101) of any one of the preceding claims, wherein the extension area (411) surrounds a portion of the third hinge (300c).

5. The electronic device (101) of any one of the preceding claims, wherein the third hinge (300c) includes a first spiral rotating member (321) connected to the first housing (210), a second spiral rotating member (322) connected to the second housing (220), and a slide member (325) configured to receive at least a portion of the first spiral rotating member (321) and at least a portion of the second spiral rotating member (322), wherein the spiral rotating members (321, 322), in conjunction with the sliding member (325), interlock the rotation of the first housing (210) and the rotation of the second housing (220).

6. The electronic device (101) of claim 2 or claim 3, further comprising a waterproofing member (750) positioned between the second area (414) and the battery (252) and including a first waterproofing member configured to surround at least a portion of the first connector (410-1) and a second waterproofing member configured to surround at least a portion of the second connector (410-2).

7. The electronic device (101) of any one of the preceding claims, further comprising,
a hinge cover (240) configured to receive the first hinge (300a), the second hinge (300b), and the third hinge (300c),
wherein at least a portion of the extension area (411) extends along the hinge cover.

8. The electronic device (101) of any one of the preceding claims, wherein the at least one electronic component (800) includes at least one of a communication module (190; 920) or a speaker module (930).

9. The electronic device (101) of claim 8, further comprising,
an antenna module (910) including a first antenna (911) positioned on an upper portion (210d) of the first housing (210) and a second antenna (912) positioned on a lower portion (210e) of the first housing (210),
wherein the communication module (190; 920) includes a communication integrated circuit (921) mounted on the main area (412), a first front-end module (922) electrically connected with the first antenna (911) and the communication integrated circuit (921), and a second front-end module (923) electrically connected with the second antenna (912) and the communication integrated circuit (921), and
one of the first front-end module (922) or the second front-end module (923) is mounted in the extension area (411) positioned between the third hinge (300c) and the battery (252), and the other is mounted in the main area (412).

10. The electronic device (101) of claim 8 or claim 7, wherein the speaker module (930) includes:
a first speaker hole positioned in an upper portion (210d) of the first housing (210), a second speaker hole positioned in a lower portion (210e) of the first housing (210), a first speaker adjacent to the first speaker hole, a second speaker adjacent to the second speaker hole, and a sound output module mounted in the extension area (411) positioned between the third hinge (300c) and the battery (252),
wherein the sound output module is configured to control an operation of the first speaker or the second speaker.

11. The electronic device (101) of any one of claims 8 to 10, further comprising a shielding member (831, 832) including at least one of a first shielding member (831) configured to surround at least a portion of the communication module (190; 920) or a second shielding member (832) configured to surround at least a portion of the speaker module (930).

12. The electronic device (101) of claim 11, further comprising a rear member (270) being at least partially positioned on at least a portion of the extension area (411) and configured to surround at least a portion of the shielding member (831, 832).

13. The electronic device (101) of any one of the preceding claims, wherein the display (230) includes a first display area (231) disposed on the first housing (210), a second display area (232) disposed on the second housing (220), and a folding area (233) positioned between the first display area (231) and the second display area (232).

## Patentansprüche

1. Elektronische Vorrichtung (101), umfassend:
ein Gehäuse (201), das ein erstes Gehäuse (210) und ein zweites Gehäuse (220) umfasst;
eine Anzeige (230), die auf dem ersten Gehäuse (210) und dem zweiten Gehäuse (220) angeordnet ist;
eine Scharnierstruktur (300; 500; 600), die konfiguriert ist, um das erste Gehäuse (210) und das zweite Gehäuse (220) zu verbinden, und ein erstes Scharnier (300a), ein zweites Scharnier (300b) und ein drittes Scharnier (300c) beinhaltet, das zwischen dem ersten Scharnier (300a) und dem zweiten Scharnier (300b) positioniert ist;
eine Batterie (252), die im ersten Gehäuse (210) angeordnet ist;
eine Platteneinheit (260; 400), die eine erste Leiterplatte (262; 410), die in dem ersten Gehäuse (210) angeordnet ist, und eine zweite Leiterplatte (264; 420), die in dem zweiten Gehäuse (220) angeordnet ist, beinhaltet, wobei die erste Leiterplatte (262; 410) einen Hauptbereich (412) und einen Erweiterungsbereich (411) beinhaltet, wobei der Hauptbereich (412) zumindest teilweise auf einem oberen Abschnitt der Batterie (252) positioniert ist und eine zweite Breite (w2) aufweist, und wobei der Erweiterungsbereich (411) eine Form aufweist, die sich von dem Hauptbereich (412) entlang einer Längsrichtung der Scharnierstruktur (300; 500; 600) erstreckt, und eine erste Breite (w1) aufweist, die kürzer als die zweite Breite (w2) ist;
eine Verbindungsstruktur (700), die konfiguriert ist, um die erste Leiterplatte (262; 410) und die zweite Leiterplatte (264; 420) elektrisch zu verbinden, und die ein erstes Verbindungselement (710) und ein zweites Verbindungselement (720) beinhaltet;
**dadurch gekennzeichnet, dass** das erste Verbindungselement (710) zumindest teilweise zwischen dem ersten Scharnier (300a) und dem dritten Scharnier (300c) positioniert ist und dass das zweite Verbindungselement (720) zumindest teilweise zwischen dem zweiten Scharnier (300b) und dem dritten Scharnier (300c) positioniert ist, wobei das dritte Scharnier (300c) zwischen dem ersten Verbindungselement (710) und dem zweiten Verbindungselement (720) positioniert ist; und
dass die elektronische Vorrichtung (101) ferner mindestens eine elektronische Komponente (800) umfasst, die zwischen dem dritten Scharnier (300c) und der Batterie (252) positioniert ist und im Erweiterungsbereich (411) angeordnet ist.

2. Elektronische Vorrichtung (101) nach Anspruch 1, wobei der Erweiterungsbereich (411) einen ersten Bereich (413), der zumindest teilweise zwischen dem dritten Scharnier (300c) und der Batterie (252) positioniert ist, und einen zweiten Bereich (414) beinhaltet, der einen 2-1-ten Bereich (414a), der zwischen dem ersten Bereich (413) und dem Hauptbereich (412) positioniert ist und einen ersten Verbindungsstecker (410-1) beinhaltet, und einen 2-2-ten Bereich (414b) beinhaltet, der sich von dem ersten Bereich (413) entlang der Längsrichtung der Scharnierstruktur (300; 500; 600) nach unten erstreckt und einen zweiten Verbindungsstecker (410-2) beinhaltet.

3. Elektronische Vorrichtung (101) nach Anspruch 2,
wobei ein erster Abstand zwischen dem ersten Bereich (413) und der Batterie (252) kleiner ist als ein zweiter Abstand zwischen dem zweiten Bereich (414) und der Batterie (252), und
ein dritter Abstand zwischen dem ersten Bereich (413) und einer Scharnierabdeckung 240 größer ist als ein vierter Abstand zwischen dem zweiten Bereich (414) und der Scharnierabdeckung 240.

4. Elektronische Vorrichtung (101) nach einem der vorhergehenden Ansprüche, wobei der Erweiterungsabschnitt (411) einen Abschnitt des dritten Scharniers (300c) umgibt.

5. Elektronische Vorrichtung (101) nach einem der vorhergehenden Ansprüche, wobei das dritte Scharnier (300c) ein erstes spiralförmiges Drehelement (321), das mit dem ersten Gehäuse (210) verbunden ist, ein zweites spiralförmiges Drehelement (322), das mit dem zweiten Gehäuse (220) verbunden ist, und ein Schiebeelement (325) beinhaltet, das so konfiguriert ist, dass es mindestens einen Abschnitt des ersten spiralförmigen Drehelements (321) und mindestens einen Abschnitt des zweiten spiralförmigen Drehelements (322) aufnimmt, wobei die spiralförmigen Drehelemente (321, 322) in Verbindung mit dem Schiebeelement (325) die Drehung des ersten Gehäuses (210) und die Drehung des zweiten Gehäuses (220) verriegeln.

6. Elektronische Vorrichtung (101) nach Anspruch 2 oder Anspruch 3, ferner umfassend ein Abdichtungselement (750), das zwischen dem zweiten Bereich (414) und der Batterie (252) positioniert ist und ein erstes Abdichtungselement, das so konfiguriert ist, dass es mindestens einen Abschnitt des ersten Verbindungssteckers (410-1) umgibt, und ein zweites Abdichtungselement beinhaltet, das so konfiguriert ist, dass es mindestens einen Abschnitt des zweiten Verbindungssteckers (410-2) umgibt.

7. Elektronische Vorrichtung (101) nach einem der vorhergehenden Ansprüche, ferner umfassend
eine Scharnierabdeckung (240), die konfiguriert ist, um das erste Scharnier (300a), das zweite Scharnier (300b) und das dritte Scharnier (300c) aufzunehmen,
wobei sich mindestens ein Abschnitt des Erweiterungsbereichs (411) entlang der Scharnierabdeckung erstreckt.

8. Elektronische Vorrichtung (101) nach einem der vorhergehenden Ansprüche, wobei die mindestens eine elektronische Komponente (800) mindestens eines von einem Kommunikationsmodul (190; 920) oder einem Lautsprechermodul (930) beinhaltet.

9. Elektronische Vorrichtung (101) nach Anspruch 8, ferner umfassend
ein Antennenmodul (910), das eine erste Antenne (911), die an einem oberen Abschnitt (210d) des ersten Gehäuses (210) positioniert ist, und eine zweite Antenne (912) beinhaltet, die an einem unteren Abschnitt (210e) des ersten Gehäuses (210) positioniert ist,
wobei das Kommunikationsmodul (190; 920) eine integrierte Kommunikationsschaltung (921), die an dem Hauptbereich (412) montiert ist, ein erstes Frontend-Modul (922), das elektrisch mit der ersten Antenne (911) und der integrierten Kommunikationsschaltung (921) verbunden ist, und ein zweites Frontend-Modul (923) beinhaltet, das elektrisch mit der zweiten Antenne (912) und der integrierten Kommunikationsschaltung (921) verbunden ist, und
eines des ersten Frontend-Moduls (922) oder des zweiten Frontend-Moduls (923) im Erweiterungsbereich (411), der zwischen dem dritten Scharnier (300c) und der Batterie (252) positioniert ist, montiert ist und das andere im Hauptbereich (412) montiert ist.

10. Elektronische Vorrichtung (101) nach Anspruch 8 oder Anspruch 7, wobei das Lautsprechermodul (930) Folgendes beinhaltet:
ein erstes Lautsprecherloch, das in einem oberen Abschnitt (210d) des ersten Gehäuses (210) positioniert ist, ein zweites Lautsprecherloch, das in einem unteren Abschnitt (210e) des ersten Gehäuses (210) positioniert ist, einen ersten Lautsprecher, der an das erste Lautsprecherloch angrenzt, einen zweiten Lautsprecher, der an das zweite Lautsprecherloch angrenzt, und ein Tonausgabemodul, das in dem Erweiterungsbereich (411) montiert ist, der zwischen dem dritten Scharnier (300c) und der Batterie (252) positioniert ist,
wobei das Tonausgabemodul konfiguriert ist, um einen Vorgang des ersten Lautsprechers oder des zweiten Lautsprechers zu steuern.

11. Elektronische Vorrichtung (101) nach einem der Ansprüche 8 bis 10, ferner umfassend ein Abschirmelement (831, 832), das mindestens eines von einem ersten Abschirmelement (831), das so konfiguriert ist, dass es mindestens einen Abschnitt des Kommunikationsmoduls (190; 920) umgibt, oder einem zweiten Abschirmelement (832) beinhaltet, das so konfiguriert ist, dass es mindestens einen Abschnitt des Lautsprechermoduls (930) umgibt.

12. Elektronische Vorrichtung (101) nach Anspruch 11, ferner umfassend ein hinteres Element (270), das mindestens teilweise auf mindestens einem Abschnitt des Erweiterungsbereichs (411) positioniert und so konfiguriert ist, dass es mindestens einen Abschnitt des Abschirmelements (831, 832) umgibt.

13. Elektronische Vorrichtung (101) nach einem der vorhergehenden Ansprüche, wobei die Anzeige (230) einen ersten Anzeigebereich (231), der auf dem ersten Gehäuse (210) angeordnet ist, einen zweiten Anzeigebereich (232), der auf dem zweiten Gehäuse (220) angeordnet ist, und einen Faltungsbereich (233) beinhaltet, der zwischen dem ersten Anzeigebereich (231) und dem zweiten Anzeigebereich (232) positioniert ist.

## Revendications

1. Dispositif électronique (101), comprenant :
un boîtier (201) comprenant un premier boîtier (210) et un deuxième boîtier (220) ;
un affichage (230) disposé sur le premier boîtier (210) et le deuxième boîtier (220) ;
une structure de charnière (300 ; 500 ; 600) configurée pour relier le premier boîtier (210) et le second boîtier (220) et comprenant une première charnière (300a), une seconde charnière (300b) et une troisième charnière (300c) positionnée entre la première charnière (300a) et la seconde charnière (300b) ;
une batterie (252) disposée dans le premier boîtier (210) ; et
une unité de carte (260 ; 400) comprenant une première carte de circuit (262 ; 410) disposée dans le premier boîtier (210) et une seconde carte de circuit (264 ; 420) disposée dans le second boîtier (220), la première carte de circuit (262 ; 410) comprenant une zone principale (412) et une zone d'extension (411), la zone principale (412) étant au moins partiellement positionnée sur une partie supérieure de la batterie (252) et présentant une seconde largeur (w2), et la zone d'extension (411) présentant une forme s'étendant à partir de la zone principale (412) le long d'une direction longitudinale de la structure de charnière (300 ; 500 ; 600) et présentant une première largeur (w1) plus courte que la seconde largeur (w2) ;
une structure de connexion (700) configurée pour connecter électriquement la première carte de circuit (262 ; 410) et la seconde carte de circuit (264 ; 420) et comprenant un premier élément de connexion (710) et un second élément de connexion (720) ;
**caractérisé en ce que** le premier élément de connexion (710) est au moins partiellement positionné entre la première charnière (300a) et la troisième charnière (300c) et **en ce que** le second élément de connexion (720) est au moins partiellement positionné entre la seconde charnière (300b) et la troisième charnière (300c), la troisième charnière (300c) étant positionnée entre le premier élément de connexion (710) et le second élément de connexion (720) ; et
**en ce que** le dispositif électronique (101) comprend en outre au moins un composant électronique (800) positionné entre la troisième charnière (300c) et la batterie (252) et disposé sur la zone d'extension (411).

2. Dispositif électronique (101) de la revendication 1, dans lequel la zone d'extension (411) comprend une première zone (413) étant au moins partiellement positionnée entre la troisième charnière (300c) et la batterie (252) et une seconde zone (414) comprenant une zone 2-1e (414a) positionnée entre la première zone (413) et la zone principale (412) et comprenant un premier connecteur (410-1) et une zone 2-2e (414b) s'étendant vers le bas à partir de la première zone (413) le long de la direction longitudinale de la structure de charnière (300 ; 500 ; 600) comprenant un second connecteur (410-2).

3. Dispositif électronique (101) de la revendication 2,
dans lequel une première distance entre la première zone (413) et la batterie (252) est plus courte qu'une seconde distance entre la seconde zone (414) et la batterie (252), et
une troisième distance entre la première zone (413) et un couvercle de charnière 240 est plus longue qu'une quatrième distance entre la seconde zone (414) et le couvercle de charnière 240.

4. Dispositif électronique (101) de l'une quelconque des revendications précédentes, dans lequel la zone d'extension (411) entoure une partie de la troisième charnière (300c).

5. Dispositif électronique (101) de l'une quelconque des revendications précédentes, dans lequel la troisième charnière (300c) comprend un premier élément rotatif en spirale (321) relié au premier boîtier (210), un second élément rotatif en spirale (322) relié au second boîtier (220), et un élément de glissement (325) configuré pour recevoir au moins une partie du premier élément rotatif en spirale (321) et au moins une partie du second élément rotatif en spirale (322), les éléments rotatifs en spirale (321, 322), en conjonction avec l'élément de glissement (325), verrouillant la rotation du premier boîtier (210) et la rotation du second boîtier (220).

6. Dispositif électronique (101) de la revendication 2 ou de la revendication 3, comprenant en outre un élément étanche à l'eau (750) positionné entre la deuxième zone (414) et la batterie (252) et comportant un premier élément étanche à l'eau configuré pour entourer au moins une partie du premier connecteur (410-1) et un deuxième élément étanche à l'eau configuré pour entourer au moins une partie du deuxième connecteur (410-2).

7. Dispositif électronique (101) de l'une quelconque des revendications précédentes, comprenant en outre,
un couvercle de charnière (240) configuré pour recevoir la première charnière (300a), la seconde charnière (300b) et la troisième charnière (300c),
dans lequel au moins une partie de la zone d'extension (411) s'étend le long du couvercle de charnière.

8. Dispositif électronique (101) de l'une quelconque des revendications précédentes, dans lequel l'au moins un composant électronique (800) comprend au moins un d'un module de communication (190 ; 920) ou d'un module de haut-parleur (930).

9. Dispositif électronique (101) de la revendication 8, comprenant en outre,
un module d'antenne (910) comprenant une première antenne (911) positionnée sur une partie supérieure (210d) du premier boîtier (210) et une seconde antenne (912) positionnée sur une partie inférieure (210e) du premier boîtier (210),
dans lequel le module de communication (190 ; 920) comprend un circuit intégré de communication (921) monté sur la zone principale (412), un premier module frontal (922) connecté électriquement à la première antenne (911) et au circuit intégré de communication (921), et un second module frontal (923) connecté électriquement à la seconde antenne (912) et au circuit intégré de communication (921), et
l'un du premier module frontal (922) ou du second module frontal (923) est monté dans la zone d'extension (411) positionnée entre la troisième charnière (300c) et la batterie (252), et l'autre est monté dans la zone principale (412).

10. Dispositif électronique (101) de la revendication 8 ou de la revendication 7, dans lequel le module de haut-parleur (930) comprend :
un premier trou de haut-parleur positionné dans une partie supérieure (210d) du premier boîtier (210), un second trou de haut-parleur positionné dans une partie inférieure (210e) du premier boîtier (210), un premier haut-parleur adjacent au premier trou de haut-parleur, un second haut-parleur adjacent au second trou de haut-parleur, et un module de sortie sonore monté dans la zone d'extension (411) positionnée entre la troisième charnière (300c) et la batterie (252),
dans lequel le module de sortie sonore est configuré pour commander une opération du premier haut-parleur ou du second haut-parleur.

11. Dispositif électronique (101) de l'une quelconque des revendications 8 à 10, comprenant en outre un élément blindage (831, 832) comprenant au moins l'un d'un premier élément de blindage (831) configuré pour entourer au moins une partie du module de communication (190 ; 920) ou d'un second élément de blindage (832) configuré pour entourer au moins une partie du module de haut-parleur (930).

12. Dispositif électronique (101) de la revendication 11, comprenant en outre un élément arrière (270) étant au moins partiellement positionné sur au moins une partie de la zone d'extension (411) et configuré pour entourer au moins une partie de l'élément de blindage (831, 832).

13. Dispositif électronique (101) de l'une quelconque des revendications précédentes, dans lequel l'affichage (230) comprend une première zone d'affichage (231) disposée sur le premier boîtier (210), une deuxième zone d'affichage (232) disposée sur le deuxième boîtier (220), et une zone de pliage (233) positionnée entre la première zone d'affichage (231) et la deuxième zone d'affichage (232).
